# EUROPEAN PATENT APPLICATION

(11) **EP 4 460 086 A1**
(43) Date of publication of application: **06.11.2024**
(21) Application number: 22915505.6
(22) Date of filing: 27.10.2022
(51) Int. Cl.: H04W 36/08, H04W 16/32, H04W 36/24, H04W 36/36, H04W 72/0457, H04W 76/15

(54) **USER EQUIPMENT, WIRELESS ACCESS NETWORK NODE, AND METHODS THEREFOR**

(30) Priority: 28.12.2021 JP 2021215150
(71) Applicant: NEC Corporation, 108-8001 Tokyo (JP)
(72) Inventor: FUTAKI Hisashi, Tokyo 108-8001 (JP); HAYASHI Sadafuku, Tokyo 108-8001 (JP)
(74) Representative: MacDougall, Alan John Shaw
(86) International application number: PCT/JP2022/040270
(87) International publication number: WO 2023/127272

(57) **Abstract**

If an execution condition for a first conditional mobility is satisfied with respect to one of a plurality of candidate target cells, a UE (3) executes the first conditional mobility by applying a configuration corresponding to the one candidate target cell. The UE (3) reuses one or more execution conditions with respect to one or more candidate target cells other than the one candidate target cell in a subsequent second conditional mobility, while switching a reference cell in each execution condition from the source cell of the first conditional mobility to the one candidate target cell. This can help, for example, to implement a feature or mode of operation that enables a subsequent second conditional mobility without reconfiguration or reinitialization by the network after a first conditional mobility.

## Description

### Technical Field

The present disclosure relates to radio communication systems, and in particular to conditional mobility of a radio terminal.

### Background Art

The 3rd Generation Partnership Project (3GPP (registered trademark)) Release 16 supports Conditional Handover (CHO) and Conditional Primary Secondary Cell Group (SCG) Cell (PSCell) Change (CPC) (see, for example, Non-Patent Literature 1 and 2). CPC in 3GPP Release 16 is intra-SN CPC without Master Node (MN) involvement and supports conditional PSCell change within a single SN from a source PSCell to any of one or more candidate cells (i.e., candidate PSCells). This CPC is also referred to SN-initiated Conditional SN Modification without MN involvement.

The 3GPP Radio Access Network (RAN) Working Group is currently considering enhancements to conditional mobility to be introduced in 3GPP Release 17 (see, for example, Non-Patent Literature 3). The new conditional mobility to be introduced in 3GPP Release 17 includes Conditional PSCell Addition (CPA) and inter-SN CPC. CPA is also referred to as conditional SN addition, and inter-SN CPC is also referred to as conditional SN change. Inter-SN CPC or conditional SN change is initiated by the MN or the source SN.

In addition, further mobility enhancements are being discussed for 3GPP Release 18, including "Multi-Radio Dual Connectivity (MR-DC) with selective activation of cell groups" (see, for example, Non-Patent Literature 4 and 5). In Release 17 CPA and CPC, the UE is required to release any unused (unselected) CPC/CPA configuration in response to selecting one of the candidate target PSCells and performing random access to the selected target PSCell. Thus, the UE has no way to perform subsequent CPCs without being reconfigured and reinitialized by the network. "Multi-Radio Dual Connectivity (MR-DC) with selective activation of cell groups" aims to address this problem. Specifically, according to Non-Patent Literature 5, MR-DC with selective activation of cell groups is intended to enable subsequent CPC/CPA without reconfiguration and reinitialization of the CPC/CPA preparation by the network after the SCG is changed, thereby reducing CPC/CPA signaling overhead and interruption time.

### Citation List

### Non Patent Literature

[Non-Patent Literature 1] 3GPP TS 38.300 V16.7.0 (2021-09), "3rd Generation Partnership Project; Technical Specification Group Radio Access Network; NR; NR and NG-RAN Overall Description; Stage 2, (Release 16)", September 2021
[Non-Patent Literature 2]3GPP TS 37.340 V16.7.0 (2021-09), "3rd Generation Partnership Project; Technical Specification Group Radio Access Network; Evolved Universal Terrestrial Radio Access (E-UTRA) and NR; Multi-connectivity; Stage 2 (Release 16)", September 2021
[Non-Patent Literature 3] CATT, "Introduction of CPA and inter-SN CPC", R2-2111640, 3GPP TSG-RAN WG2 Meeting #116-e, November 1-12, 2021
[Non-Patent Literature 4] MediaTek, "Moderator's summary of discussion for [94e-14-R18-MobEnh]", RP-213541, 3GPP TSG RAN Meeting #94e, December 6-17, 2021
[Non-Patent Literature 5] MediaTek, "New WID on Further NR mobility enhancements", RP-213565, 3GPP TSG RAN Meeting #94e, December 6-17, 2021

### Summary of Invention

### Technical Problem

The inventors have studied mechanisms and procedures for implementing a feature or mode of operation referred to as "Multi-Radio Dual Connectivity (MR-DC) with selective activation of cell groups" and have identified various problems.

One of these problems concerns relates to the reuse of CPC execution conditions in a subsequent CPC. According to current discussions on 3GPP Release 17 (e.g., see Non-Patent Literature 3), in an SN-initiated inter-SN CPC initiated by a source SN, the source SN generates CPC execution conditions. Thus, these CPC execution conditions are configured relative to the source SN or the source SCG (e.g., the source PSCell). Specifically, a CPC execution condition may consist of one or more trigger conditions. A condition or criterion that triggers a CPC event may be similar to that for a measurement report event and may be, for example, CondEvent A3 or CondEvent A5. CondEvent A3 is "Conditional reconfiguration candidate becomes amount of offset better than PCell/PSCell". CondEvent A5 is "PCell/PSCell becomes worse than absolute threshold1 AND Conditional reconfiguration candidate becomes better than another absolute threshold2". The "PCell/PSCell" in these conditions is the PSCell in the case of an SN-initiated inter-SN CPC, i.e., the source PSCell provided by the source SN or the current serving PSCell. Therefore, if the serving PSCell of the UE is changed as a result of the CPC execution, the CPC execution conditions cannot be reused as it is for a subsequent CPC.

Another one of these problems relates to the use of the source PSCell prior to an intra-SN or inter-SN CPC execution (i.e., the last serving PSCell) as one of the candidate PSCells for a subsequent CPC. According to the current provisions of 3GPP Release 16 and the current discussion on Release 17, the UE releases the configuration of the source PSCell (or the last serving PSCell) in response to the CPC execution to the selected PSCell. Therefore, in order to use the source PSCell as one of the candidate PSCells for the subsequent CPC, a reconfiguration or reinitialization of the CPC is required.

Still another of these problems relates to the use of delta configuration. The configuration of a candidate PSCell for a conditional CPC can be a delta configuration based on the configuration of the source PSCell. However, the configuration of a candidate PSCell that uses a delta configuration is not easily reused in a subsequent CPC. This is because the delta configuration is based on the configuration of the source PSCell before the first CPC is performed, not on the configuration of the new source PSCell after the first CPC is performed. Therefore, after the subsequent CPC is executed, the target SN (i.e., the new source SN after the subsequent CPC is executed) must perform an RRC Reconfiguration to resume data communication.

In addition to these, there is another problem related to handling cases where an SN does not support "Multi-Radio Dual Connectivity (MR-DC) with selective activation of cell groups". This feature or mode of operation may not function properly if at least one of the multiple candidate SNs supports CPC but does not support this feature or mode of operation.

Still another problem concerns the implementation of a feature or mode of operation similar to "Multi-Radio Dual Connectivity (MR-DC) with selective activation of cell groups" in a CHO. For example, after a UE has performed a first CHO from a source cell to one of the candidate target cells, allowing the UE to perform a subsequent second CHO without reconfiguration or reinitialization of the CHO preparation by the network may contribute to mobility enhancements. However, the mechanisms and procedures for implementing such a feature or mode of operation for CHO are not clear at this time.

One of the objects to be achieved by the example embodiments disclosed herein is to provide apparatuses, methods, and programs that contribute to solving at least one of a plurality of problems, including the problems described above, related to implementing a feature or mode of operation that enables a subsequent second conditional mobility without reconfiguration or reinitialization from the network after a first conditional mobility. It should be noted that this object is merely one of the objects to be achieved by the example embodiments disclosed herein. Other objects or problems and novel features will become apparent from the following description and the accompanying drawings.

### Solution to Problem

A first aspect is directed to a UE. The UE includes at least one memory and at least one processor coupled to the at least one memory. The at least one processor is configured to evaluate a plurality of execution conditions with respect to a plurality of candidate target cells for a first conditional mobility. The at least one processor is configured to, if an execution condition for one of the plurality of candidate target cells is satisfied, execute the first conditional mobility by applying a configuration corresponding to the one candidate target cell. Further, the at least one processor is configured to reuse one or more execution conditions with respect to one or more candidate target cells other than the one candidate target cell in a subsequent second conditional mobility, while switching a reference cell in the one or more execution conditions from a source cell of the first conditional mobility to the one candidate target cell.

A second aspect is directed to a method performed by a UE. The method includes the steps of:
(a) evaluating a plurality of execution conditions with respect to a plurality of candidate target cells for a first conditional mobility;
(b) if an execution condition for one of the plurality of candidate target cells is satisfied, executing the first conditional mobility by applying a configuration corresponding to the one candidate target cell; and
(c) reusing one or more execution conditions with respect to one or more candidate target cells other than the one candidate target cell in a subsequent second conditional mobility, while switching a reference cell in the one or more execution conditions from a source cell of the first conditional mobility to the one candidate target cell.

A third aspect is directed to a UE. The UE includes at least one memory and at least one processor coupled to the at least one memory. The at least one processor is configured to evaluate a plurality of execution conditions with respect to a plurality of candidate target cells for a first conditional mobility. The at least one processor is configured to, if an execution condition for one of the plurality of candidate target cells is satisfied, execute the first conditional mobility by applying a configuration corresponding to the one candidate target cell. The at least one processor is configured to reuse one or more configurations of one or more candidate target cells other than the one candidate target cell in a subsequent second conditional mobility. Further, the at least one processor is configured to receive, from a radio access network (RAN) node of the one candidate target cell, one or more updated execution conditions with respect to the one or more candidate target cells for the subsequent second conditional mobility.

A fourth aspect is directed to a method performed by a UE. The method includes the steps of:
(a) evaluating a plurality of execution conditions with respect to a plurality of candidate target cells for a first conditional mobility;
(b) if an execution condition for one of the plurality of candidate target cells is satisfied, executing the first conditional mobility by applying a configuration corresponding to the one candidate target cell;
(c) reusing one or more configurations of one or more candidate target cells other than the one candidate target cell in a subsequent second conditional mobility; and
(d) receiving, from a radio access network (RAN) node of the one candidate target cell, one or more updated execution conditions with respect to the one or more candidate target cells for the subsequent second conditional mobility.

A fifth aspect is directed to a radio access network (RAN) node. The RAN node includes at least one memory and at least one processor coupled to the at least one memory. The at least one processor is configured to provide a UE with a plurality of configurations regarding a plurality of candidate target cells of a first conditional mobility of the UE. Further, the at least one processor is configured to, if one of the plurality of candidate target cells is selected by the UE, to enable a subsequent second conditional mobility in which one or more configurations of one or more candidate target cells other than the selected candidate target cell are reused by the UE, provide the UE with one or more updated execution conditions with respect to the one or more candidate target cells.

A sixth aspect is directed to a method performed by a RAN node. The method includes the steps of:
(a) providing a UE with a plurality of configurations regarding a plurality of candidate target cells of a first conditional mobility of the UE; and
(b) if one of the plurality of candidate target cells is selected by the UE, to enable a subsequent second conditional mobility in which one or more configurations of one or more candidate target cells other than the selected candidate target cell are reused by the UE, providing the UE with one or more updated execution conditions with respect to the one or more candidate target cells.

A seventh aspect is directed to a UE. The UE includes at least one memory and at least one processor coupled to the at least one memory. The at least one processor is configured to evaluate a plurality of execution conditions with respect to one or more candidate target cells for a first conditional mobility from a source node. The at least one processor is configured to, if an execution condition for one of the one or more candidate target cells is satisfied, execute the first conditional mobility by applying a configuration corresponding to the one candidate target cell. Further, the at least one processor is configured to, after the first conditional mobility, maintain a configuration of the source cell for reuse in a subsequent second conditional mobility in which the source cell is a new candidate target cell.

An eighth aspect is directed to a method performed by a UE. The method includes the steps of:
(a) evaluating a plurality of execution conditions with respect to one or more candidate target cells for a first conditional mobility from a source node;
(b) if an execution condition for one of the one or more candidate target cells is satisfied, executing the first conditional mobility by applying a configuration corresponding to the one candidate target cell; and
(c) after the first conditional mobility, maintaining a configuration of the source cell for reuse in a subsequent second conditional mobility in which the source cell is a new candidate target cell.

A ninth aspect is directed to a RAN node. The RAN node includes at least one memory and at least one processor coupled to the at least one memory. The at least one processor is configured to receive from a source node or a master node (MN) a control message requesting preparation of a candidate target cell for a first conditional mobility of a UE. Further, the at least one processor is configured to, if a configuration of the candidate target cell provided to the UE for the first conditional mobility is to be reused by the UE for a subsequent second conditional mobility after the first conditional mobility, apply a full configuration to the configuration of the candidate target cell without applying a delta configuration based on a configuration of a current source cell to the configuration of the candidate target cell.

A tenth aspect is directed to a method performed by a RAN node. The method includes the steps of:
(a) receiving from a source node or an MN a control message requesting preparation of a candidate target cell for a first conditional mobility of a UE; and
(b) if a configuration of the candidate target cell provided to the UE for the first conditional mobility is to be reused by the UE for a subsequent second conditional mobility after the first conditional mobility, applying a full configuration to the configuration of the candidate target cell without applying a delta configuration based on a configuration of a current source cell to the configuration of the candidate target cell.

An eleventh aspect is directed to a RAN node. The RAN node includes at least one memory and at least one processor coupled to the at least one memory. The at least one processor is configured to receive, from a source node or an MN, a control message requesting preparation of a candidate target cell for a first conditional mobility of a UE. The control message indicates that a mode of operation is recommended in which a configuration of the candidate target cell to be provided to the UE for the first conditional mobility is reused by the UE for a subsequent second conditional mobility after the first conditional mobility. The at least one processor is configured to, if the RAN node does not support the mode of operation, send a second control message indicating rejection of the preparation of the candidate target cell to the source node or the MN.

A twelfth aspect is directed to a method performed by a RAN node. The method includes the steps of:
(a) receiving, from a source node or an MN, a control message requesting preparation of a candidate target cell for a first conditional mobility of a UE, the control message indicating that a mode of operation is recommended in which a configuration of the candidate target cell to be provided to the UE for the first conditional mobility is reused by the UE for a subsequent second conditional mobility after the first conditional mobility; and
(b) if the RAN node does not support the mode of operation, sending a second control message indicating rejection of the preparation of the candidate target cell to the source node or the MN.

A thirteenth aspect is directed to a RAN node. The RAN node includes at least one memory and at least one processor coupled to the at least one memory. The at least one processor is configured to receive, from a source node or an MN, a control message requesting preparation of a candidate target cell for a first conditional mobility of a UE. The control message indicates that a mode of operation is recommended in which a configuration of the candidate target cell to be provided to the UE for the first conditional mobility is reused by the UE for a subsequent second conditional mobility after the first conditional mobility. The at least one processor is configured to, if the RAN node does not support the mode of operation but can prepare the candidate target cell for the first conditional mobility, send a second control message indicating acceptance of the configuration of the candidate target cell to the source node or the MN.

A fourteenth aspect is directed to a method performed by a RAN node. The method includes the steps of:
(a) receiving, from a source node or an MN, a control message requesting preparation of a candidate target cell for a first conditional mobility of a UE, the control message indicating that a mode of operation is recommended in which a configuration of the candidate target cell to be provided to the UE for the first conditional mobility is reused by the UE for a subsequent second conditional mobility after the first conditional mobility; and
(b) if the RAN node does not support the mode of operation but can prepare the candidate target cell for the first conditional mobility, send a second control message indicating acceptance of the configuration of the candidate target cell to the source node or the MN.

A fifteenth aspect is directed to a program. The program includes a set of instructions (software codes) that, when loaded into a computer, cause the computer to perform the method according to any of the aspects described above.

### Advantageous Effects of Invention

According to the above-described aspects, it is possible to provide apparatuses, methods, and programs that contribute to solving at least one of a plurality of problems related to implementing a feature or mode of operation that allows a subsequent second conditional mobility without reconfiguration or reinitialization from the network after a first conditional mobility.

### Brief Description of Drawings

Fig. 1 shows an example configuration of a radio communication system according to an example embodiment;
Fig. 2 shows an example configuration of a radio communication system according to an example embodiment;
Fig. 3 shows an example configuration of a radio communication system according to an example embodiment;
Fig. 4 shows an example configuration of a RAN node according to an example embodiment;
Fig. 5 is a flowchart showing an example of the operation of a UE according to an example embodiment;
Fig. 6 is a conceptual diagram illustrating the change of the reference cell for conditional mobility execution conditions;
Fig. 7 is a flowchart showing an example of the operation of a UE according to an example embodiment;
Fig. 8 is a sequence diagram showing an example of signaling regarding inter-SN CPC (or conditional SN change) according to an example embodiment;
Fig. 9 is a flowchart showing an example of the operation of a UE according to an example embodiment;
Fig. 10 is a sequence diagram showing an example of signaling regarding inter-SN CPC (or conditional SN change) according to an example embodiment;
Fig. 11 is a sequence diagram showing an example of signaling regarding inter-SN CPC (or conditional SN change) according to an example embodiment;
Fig. 12 is a diagram illustrating the operation of a UE according to an example embodiment;
Fig. 13 is a flowchart showing an example of the operation of a RAN node according to an example embodiment;
Fig. 14 is a flowchart showing an example of the operation of a RAN node according to an example embodiment;
Fig. 15 is a flowchart showing an example of the operation of a RAN node according to an example embodiment;
Fig. 16 is a block diagram showing an example configuration of a RAN node according to an example embodiment; and
Fig. 17 is a block diagram showing an example configuration of a UE according to an example embodiment.

### Example Embodiment

Specific example embodiments will be described hereinafter in detail with reference to the drawings. The same or corresponding elements are denoted by the same symbols throughout the drawings, and duplicated explanations are omitted as necessary for the sake of clarity.

Each of the example embodiments described below may be used individually, or two or more of the example embodiments may be appropriately combined with one another. These example embodiments include novel features different from each other. Accordingly, these example embodiments contribute to attaining objects or solving problems different from one another and contribute to obtaining advantages different from one another.

The example embodiments presented below are primarily described for the 3GPP Long Term Evolution (LTE) system and the 5th generation mobile communication system (5G system). However, these example embodiments can be applied to other radio communication systems that support technologies similar to 3GPP multi-connectivity (e.g., Dual Connectivity). The term LTE as used in this specification includes enhancements and developments of LTE and LTE-Advanced to enable interworking with the 5G system, unless otherwise noted.

As used in this specification, "if" can be interpreted to mean "when", "at or around the time", "after", "upon", "in response to determining", "in accordance with a determination", or "in response to detecting", depending on the context.

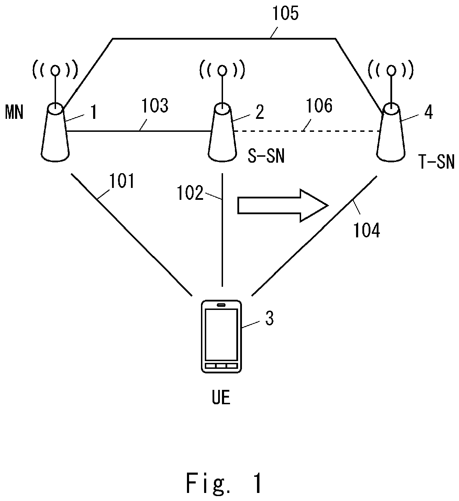

First, the configuration and operation of a plurality of network elements common to a plurality of example embodiments are described. Fig. 1 shows an example configuration of a radio communication system according to a plurality of example embodiments. In the example of Fig. 1, the radio communication system includes a RAN node 1, a RAN node 2, a RAN node 4, and a UE 3. Each element (or network function) shown in Fig. 1 can be implemented, for example, as a network element on dedicated hardware, as a software instance running on dedicated hardware, or as a virtualized function instantiated on an application platform.

The RAN node 1 may be a Central Unit (e.g., eNB-CU or gNB-CU) in a Cloud RAN (C-RAN) deployment, or a combination of a CU and one or more Distributed Units (e.g., eNB-DUs or gNB-DUs). The C-RAN is also referred to as a CU/DU split. The CU may include a Control Plane (CP) Unit (e.g., gNB-CU-CP) and one or more User Plane (UP) Units (e.g., gNB-CU-UPs). Accordingly, the RAN node 1 may be a CU-CP or a combination of a CU-CP and a CU-UP(s). Similarly, each of the RAN nodes 2 and 4 may be a CU or a combination of a CU and one or more DUs. Each of the RAN nodes 2 and 4 may be a CU-CP or a combination of a CU-CP and a CU-UP(s).

Each of the RAN nodes 1, 2, and 4 may be an Evolved Universal Mobile Telecommunications System (UMTS) Terrestrial Radio Access Network (EUTRAN) node or a Next Generation Radio Access Network (NG-RAN) node. The EUTRAN node may be an eNB or an en-gNB. The NG-RAN node may be a gNB or an ng-eNB. The en-gNB is a node that provides NR user plane and control plane protocol terminations towards a UE and acts as a Secondary Node (SN) in E-UTRA-NR Dual Connectivity (EN-DC). The ng-eNB is a node that provides E-UTRA user plane and control plane protocol terminations towards a UE and is connected to a 5GC via an NG interface. The Radio Access Technology (RAT) of the RAN node 1 may be different from that of the RAN nodes 2 and 4.

The RAN node 1 and the RAN node 2 communicate with each other through an inter-node interface (i.e., X2 interface or Xn interface) 103. The RAN node 1 and the RAN node 2 operate as a Master Node (MN) and a Secondary Node (SN), respectively, in dual connectivity. In addition, the RAN node 1 and the RAN node 4 communicate with each other through an inter-node interface (i.e., X2 interface or Xn interface) 105. The RAN node 1 and the RAN node 4 can operate as an MN and an SN, respectively, in DC.

The RAN nodes 1, 2, and 4 and the UE 3 support inter-SN CPC from an SCG provided by the RAN node 2 to an SCG provided by the RAN node 4. Accordingly, in the following, the RAN node 1 may be referred to as MN 1, the RAN node 2 may be referred to as source SN (S-SN) 2, and the RAN node 4 may be referred to as target SN (T-SN) 4 or candidate SN 4. Inter-SN CPC may also be referred to as conditional SN change. Inter-SN CPC (or conditional SN change) is an inter-SN PSCell change procedure (or SN change procedure) that is performed only when a CPC execution condition is met.

Although not shown in Fig. 1, a plurality of candidate cells (i.e., candidate PSCells) provided by a plurality of candidate SNs 4 may be prepared for an inter-SN CPC. In the inter-SN CPC procedure, the UE 3 receives, from the MN 1, configurations of one or more candidate PSCells prepared by one or more candidate SNs and one or more CPC execution conditions associated therewith. More specifically, the configuration of each candidate PSCell is an Information Element (IE) (e.g., condRRCReconfig) of an RRC message of the MN 1, and the configurations of one or more candidate PSCells and the associated CPC execution conditions are included in conditional mobility configuration information (e.g., conditionalReconfiguration IE) generated by the MN 1.

The configuration of each candidate PSCell is generated by the candidate SN (e.g., candidate SN 4) that provides (or has prepared) that candidate PSCell. The configuration of each candidate PSCell includes at least configuration information for the candidate PSCell. The configuration of each candidate PSCell may further include configuration information for one or more SCells that accompany (i.e., are configured together with or in association with) the candidate PSCell. The configuration of each candidate PSCell may be a radio bearer (RB) configuration, a cell group (CG) configuration, an SCG configuration, or an SCG radio resource configuration, or any combination thereof. More specifically, the configuration of each candidate PSCell may be an SN RRC Reconfiguration message generated by the candidate SN (e.g., candidate SN 4) that provides (or has prepared) that candidate PSCell. Part or all of the configurations of one or more candidate PSCells are contained in a CPC configuration sent from the MN 1 to the UE 3. The CPC configuration of an inter-SN CPC is a list of one or more MN RRC Reconfiguration messages. Each MN RRC Reconfiguration message contains the configuration of a candidate PSCell (e.g., one or any combination of RB configuration, CG configuration, SCG configuration, SCG radio resource configuration, and SN RRC Reconfiguration message) received from the candidate SN.

On the other hand, CPC execution conditions are generated by the MN 1 in the case of MN-initiated inter-SN CPC and by the source SN 2 in the case of SN-initiated inter-SN CPC. A CPC execution condition may consist of one or more trigger conditions. A condition or criterion that triggers a CPC event may be similar to that for a measurement report event and may be, for example, CondEvent B1, CondEvent A3, CondEvent A4, or CondEvent A5. CondEvent B1 is "Conditional reconfiguration candidate becomes better than absolute threshold". CondEvent A3 is "Conditional reconfiguration candidate becomes amount of offset better than PCell/PSCell". CondEvent A4 is "Conditional reconfiguration candidate becomes better than absolute threshold". CondEvent A5 is "PCell/PSCell becomes worse than absolute threshold1 AND Conditional reconfiguration candidate becomes better than another absolute threshold2". The UE 3 evaluates the CPC execution conditions. If the execution condition(s) for one candidate PSCell is (or are) met, the UE 3 applies the PSCell configuration (e.g., one or any combination of RB configuration, CG configuration, SCG configuration, SCG radio resource configuration, and SN RRC Reconfiguration message) corresponding to the selected candidate PSCell (i.e., the candidate PSCell whose execution condition(s) is (or are) satisfied). If a bearer requiring SCG radio resources is configured, the UE 3 performs synchronization with the selected PSCell. If the execution conditions for two or more candidate PSCells are satisfied, the UE 3 may select one of these candidate PSCells and perform the operation described above.

The UE 3 communicates with the MN 1 and the S-SN 2 via the air interfaces 101 and 102 and performs dual connectivity of the MCG provided by the MN 1 and the SCG provided by the S-SN 2. In addition, by performing an inter-SN CPC, the UE 3 communicates with the MN 1 and the T-SN 4 via the air interfaces 101 and 104 and performs dual connectivity of the MCG provided by the MN 1 and the SCG provided by the T-SN 4.

This dual connectivity may be Multi-Radio Dual Connectivity (MR-DC). The MR-DC includes E-UTRA-NR Dual Connectivity (EN-DC), NG-RAN E-UTRA-NR Dual Connectivity (NGEN-DC), NR-E-UTRA Dual Connectivity (NE-DC), and NR-NR Dual Connectivity (NR-DC). Accordingly, the MN 1 may be one of a Master eNB (in EN-DC), a Master ng-eNB (in NGEN-DC), and a Master gNB (in NR-DC and NE-DC). Similarly, each of the S-SN 2 and the T-SN 4 may be one of an en-gNB (in EN-DC), a Secondary ng-eNB (in NE-DC), and a Secondary gNB (in NR-DC and NGEN-DC). In EN-DC, the UE 3 is connected to an eNB acting as the MN 1 and to an en-gNB acting as the S-SN 2 or the T-SN 4. In NGEN-DC, the UE 3 is connected to an ng-eNB acting as the MN 1 and to a gNB acting as the S-SN 2 or the T-SN 4. In NE-DC, the UE 3 is connected to a gNB acting as the MN 1 and to an ng-eNB acting as the S-SN 2 or the T-SN 4. In NR-DC, the UE 3 is connected to one gNB (or gNB-DU) acting as the MN 1 and to another gNB (or gNB-DU) acting as the S-SN 2 or the T-SN 4.

The MCG is a group of serving cells associated with (or provided by) the MN 1, including the SpCell (i.e., Primary Cell (PCell)) and optionally one or more Secondary Cells (SCells). Meanwhile, the SCG is a group of serving cells associated with (or provided by) the S-SN 2 or the T-SN 4 and includes the Primary SCG Cell (PSCell) and optionally one or more Secondary Cells (SCells). The PSCell is the Special Cell (SpCell) of the SCG and supports Physical Uplink Control Channel (PUCCH) transmission and contention-based random access. In LTE (e.g., LTE-DC and NE-DC), PSCell may be an abbreviation of Primary SCell.

As used in the present specification, the term "primary SCG cell" and its abbreviation "PSCell" stands for a cell that is included in a cell group provided by an SN in dual connectivity, has an uplink component carrier, and is configured with uplink control channel (e.g., PUCCH) resources. Specifically, the term "primary SCG cell" and its abbreviation "PSCell" may refer to a Primary SCG Cell of a cell group provided by an SN (e.g., en-gNB in EN-DC, gNB in NGEN-DC, or gNB in NR-DC) supporting 5G NR, or may refer to a Primary SCell of a cell group provided by an SN (e.g., eNB in LTE DC, or ng-eNB in NE-DC) supporting E-UTRA.

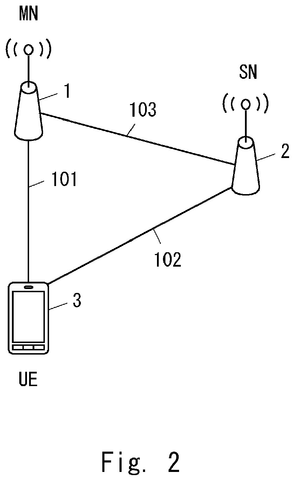

Fig. 2 shows another example configuration of a radio communication system according to a plurality of example embodiments. In the example in Fig. 2, the radio communication system includes a RAN node 1, a RAN node 2, and a UE 3. Each element (or network function) shown in Fig. 2 can be implemented, for example, as a network element on dedicated hardware, as a software instance running on dedicated hardware, or as a virtualized function instantiated on an application platform.

The RAN node 1, RAN node 2, and UE 3 in the example in Fig. 2 may have a similar configuration and functionality to those in the example in Fig. 1. Specifically, the RAN node 1 and the RAN node 2 communicate with each other through an inter-node interface (i.e., X2 interface or Xn interface) 103. The RAN node 1 and the RAN node 2 operate as an MN and a SN, respectively, in dual connectivity. The UE 3 communicates with the MN 1 and the SN 2 via air interfaces 101 and 102 and performs dual connectivity of an MCG and an SCG. This dual connectivity may be Multi-Radio Dual Connectivity (MR-DC).

The RAN nodes 1 and 2 and the UE 3 support Conditional PSCell Addition (CPA) to add an SCG provided by the RAN node 2 for the UE 3. Accordingly, in the following, the RAN node 1 may be referred to as MN 1 and the RAN node 2 may be referred to as candidate SN 2. CPA may be referred to as conditional SN addition. CPA (or conditional SN addition) is a PSCell addition procedure (or SN addition procedure) that is performed only when a CPA execution condition is met.

Although not shown in Fig. 2, a plurality of candidate PSCells provided by a plurality of candidate SNs 2 may be prepared for a CPA. In the CPA procedure, the UE 3 receives, from the MN 1, configurations of one or more candidate PSCells prepared by one or more candidate SNs and one or more CPA execution conditions associated therewith. More specifically, the configuration of each candidate PSCell is an Information Element (IE) (e.g., condRRCReconfig) of an RRC message of the MN 1, and the configurations of one or more candidate PSCells and the associated CPA execution conditions are included in conditional mobility configuration information (e.g., conditionalReconfiguration IE) generated by the MN 1.

The configuration of each candidate PSCell is generated by the candidate SN (e.g., candidate SN 2) that provides (or has prepared) that candidate PSCell. The configuration of each candidate PSCell includes at least configuration information for the candidate PSCell. The configuration of each candidate PSCell may further include configuration information for one or more SCells that accompany (i.e., are configured together with or in association with) the candidate PSCell. The configuration of each candidate PSCell may be one or any combination of an RB configuration, a CG configuration, an SCG configuration, and an SCG radio resource configuration. More specifically, the configuration of each candidate PSCell may be an SN RRC Reconfiguration message generated by the candidate SN (e.g., candidate SN 2) that provides (or has prepared) that candidate PSCell. Part or all of the configurations of one or more candidate PSCells are contained in a CPA configuration sent from the MN 1 to the UE 3. The CPA configuration is a list of one or more MN RRC Reconfiguration messages. Each MN RRC Reconfiguration message contains the configuration of a candidate PSCell (e.g., one or any combination of RB configuration, CG configuration, SCG configuration, SCG radio resource configuration, and SN RRC Reconfiguration message) received from the candidate SN.

On the other hand, CPA execution conditions are generated by the MN 1. A CPA execution condition may consist of one or more trigger conditions. A condition or criterion that triggers a CPA event may be similar to that for a measurement report event and may be, for example, CondEvent A3, CondEvent A4, or CondEvent A5. The UE 3 evaluates the CPA execution conditions. If the execution condition(s) for one candidate PSCell is (or are) met, the UE 3 applies the PSCell configuration (i.e., one or any combination of RB configuration, CG configuration, SCG configuration, SCG radio resource configuration, and SN RRC Reconfiguration message) corresponding to the selected candidate PSCell (i.e., the candidate PSCell whose execution condition(s) is (or are) satisfied). If a bearer requiring SCG radio resources is configured, the UE 3 performs synchronization with the selected PSCell. If the execution conditions for two or more candidate PSCells are satisfied, the UE 3 may select one of these candidate PSCells and perform the operation described above.

In addition, the RAN node 2 and the UE 3 support intra-SN CPC. Intra-SN CPC may be referred to as SN-initiated Conditional SN Modification without MN involvement. Intra-SN CPC is an intra-SN PSCell change procedure that is performed only when a CPC execution condition is met.

In the intra-SN CPC procedure, the UE 3 receives from the SN 2, configurations of one or more candidate PSCells prepared by the SN 2 and one or more CPC execution conditions associated therewith. The configurations and associated CPC execution conditions for respective candidate PSCells are contained in a CPC configuration of the intra-SN CPC. The SN 2 may send these to the UE 3 via the MN 1 or to the UE 3 via a direct signaling radio bearer (i.e., Signalling Radio Bearer 3 (SRB3)) between the SN 2 and the UE 3. More specifically, the configuration of each candidate PSCell is an Information Element (IE) (e.g., condRRCReconfig) of an RRC message of the SN 2, and the configurations of one or more candidate PSCells and the associated CPC execution conditions are included in conditional mobility configuration information (e.g., conditionalReconfiguration IE) generated by the SN 2.

The configuration of each candidate PSCell includes at least configuration information for the candidate PSCell. The configuration of each candidate PSCell may further include configuration information for one or more SCells that accompany (i.e., are configured together with or in association with) the candidate PSCell. The configuration of each candidate PSCell may be a radio bearer (RB) configuration, a cell group (CG) configuration, an SCG configuration, or an SCG radio resource configuration, or any combination thereof. In particular, the configuration of each candidate PSCell may be an SN RRC Reconfiguration message generated by the SN 2.

A CPC execution condition for an Intra-SN CPC may consist of one or more trigger conditions. A condition or criterion that triggers a CPC event may be similar to that for a measurement report event and may be, for example, CondEvent A3, CondEvent A4, or CondEvent A5. The UE 3 evaluates the CPC execution conditions. If the execution condition(s) for one candidate PSCell is (or are) met, the UE 3 detaches from the source PSCell, applies the configuration corresponding to the selected candidate PSCell (i.e., the candidate PSCell whose execution condition(s) is (or are) satisfied), and synchronizes with the selected candidate PSCell. If the execution conditions for two or more candidate PSCells are satisfied, the UE 3 may select one of these candidate PSCells and perform the operation described above.

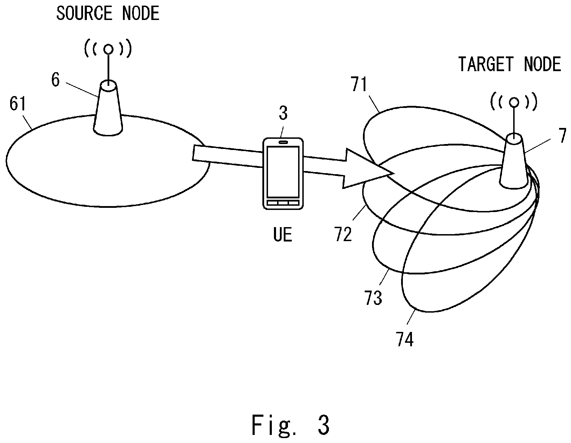

Fig. 3 shows yet another example configuration of a radio communication system according to a plurality of example embodiments. In the example in Fig. 3, the radio communication system includes a RAN node 6, a RAN node 7, and a UE 3. Each element (or network function) shown in Fig. 3 can be implemented, for example, as a network element on dedicated hardware, as a software instance running on dedicated hardware, or as a virtualized function instantiated on an application platform. Each of the RAN nodes 6 and 7 may be an EUTRAN node or an NG-RAN node. The EUTRAN node may be an eNB or an en-gNB. The NG-RAN node may be a gNB or an ng-eNB. The RAT of the RAN node 6 may be different from that of the RAN node 7.

The RAN node 6 provides at least one cell 61. The RAN node 7 provides one or more cells (e.g., four cells 71-74). In the example in Fig. 3, the cell 61 provided by the RAN node 6 is the current serving cell of the UE 3, and the UE 3 is handed over from the cell 61 to one of the cells provided by the RAN node 7. Accordingly, in the following, the RAN node 6 may be referred to as the source node or source RAN node, and the RAN node 7 may be referred to as the target node or target RAN node. The cell 61 is referred to as the source cell. The source node 6, the target node 7, and the UE 3 support conditional handover (CHO). CHO is a handover procedure that is performed only when a CHO execution condition is met.

Although not shown in Fig. 3, a plurality of candidate target cells provided by a plurality of candidate target nodes 7 may be prepared for a CHO. In the CHO procedure, the UE 3 receives from the source node 6 configurations of one or more candidate target cells prepared by one or more candidate target nodes and one or more CHO execution conditions (e.g., condExecutionCond) associated therewith. The configurations of one or more candidate target cells and the associated CHO execution conditions are contained in a CHO configuration. More specifically, the configuration of each candidate target cell is an Information Element (IE) (e.g., condRRCReconfig) of an RRC message of the source node 6, and the configurations of one or more candidate target cells and the associated CHO execution conditions are included in conditional mobility configuration information (e.g., conditionalReconfiguration IE) generated by the source node 6.

The configuration of each candidate target cell is generated by the candidate target node (e.g., target node 7) that provides (or has prepared) that candidate target cell. The configuration of each candidate target cell may be one or any combination of a radio bearer (RB) configuration, a radio resource configuration, and an RRC Reconfiguration message, generated by the candidate target node (e.g., target node 7) that provides (or has prepared) that candidate target cell.

On the other hand, CHO execution conditions are generated by the source node 6. A CHO execution condition may consist of one or more trigger conditions. A condition or criterion that triggers a CHO event may be similar to that for a measurement report event and may be, for example, CondEvent A3, CondEvent A4, or CondEvent A5. The UE 3 evaluates the CHO execution conditions. If the execution condition(s) for one candidate target cell is (or are) met, the UE 3 detaches from the source node 6, applies the configuration corresponding to the selected candidate target cell (i.e., the candidate target cell whose execution condition(s) is (or are) satisfied), and synchronizes with the selected candidate target cell. If the execution conditions for two or more candidate target cells are satisfied, the UE 3 may select one of these candidate target cells and perform the operation described above.

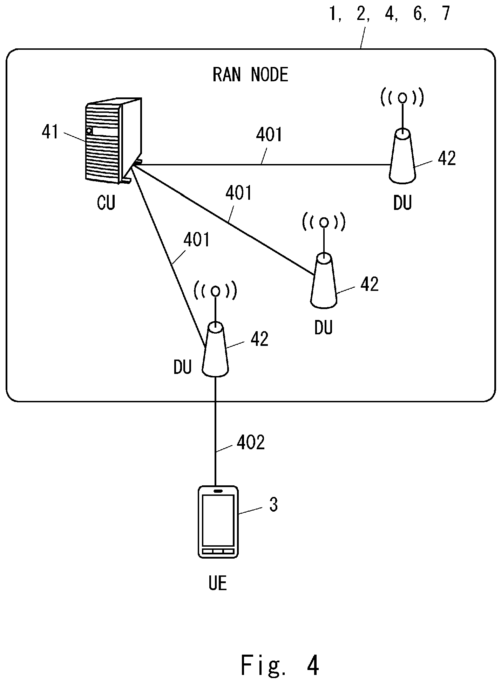

One or more of the RAN nodes 1, 2, 4, 6, and 7 may have the configuration shown in Fig. 4. Each element (or network function) shown in Fig. 4 can be implemented, for example, as a network element on dedicated hardware, as a software instance running on dedicated hardware, or as a virtualized function instantiated on an application platform. One or more of the RAN nodes 1, 2, 4, 6, and 7 may include, without limitation, a CU 41 and one or more DUs 42 as shown in Fig. 4. The CU 41 is connected to each DU 42 via an interface 401. The UE 3 is connected to at least one DU 42 via at least one air interface 402.

The CU 41 can be a logical node hosting the Radio Resource Control (RRC), Service Data Adaptation Protocol (SDAP), and Packet Data Convergence Protocol (PDCP) protocols of the gNB (or the RRC and PDCP protocols of the gNB). The DU 42 can be a logical node hosting the Radio Link Control (RLC), Medium Access Control (MAC), and Physical (PHY) layers of the gNB. If the CU 41 is a gNB-CU and the DUs 42 are gNB-DUs, the interfaces 401 can be F1 interfaces. The CU 41 can include a CU-CP and a CU-UP.

The term "conditional mobility" is used herein. Conditional mobility is a generic term that refers to one or more of CHO, CPA, intra-SN CPC (or conditional SN modification), and inter-SN CPC (or conditional SN change).

The following example embodiments provide conditional mobility enhancements. In particular, the following example embodiments provide conditional mobility enhancements to support a feature or mode of operation referred to as "Multi-Radio Dual Connectivity (MR-DC) with selective activation of cell groups". In this specification, this feature or mode of operation may be applied to conditional mobility that does not necessarily involve MR-DC, i.e., CHO. In addition, this feature or mode of operation may be applied to an enhanced CHO in which an SCG (or at least a PSCell) is added in conjunction with the execution of the CHO. As defined herein, this feature or mode of operation allows, for example, a subsequent second conditional mobility without at least reinitializing the conditional mobility preparations after a serving cell, serving cell group, PSCell, or SCG is changed or added in a first conditional mobility. In other words, as defined herein, the feature or mode of operation allows, for example, the UE 3 to reuse or maintain at least a portion of the candidate target cell configurations or candidate PSCell configurations (e.g., one or any combination of RB configuration, CG configuration, SCG configuration, radio resource configuration, and SCG radio resource configuration) received from the network in the first conditional mobility for a subsequent second conditional mobility. At least some of the execution conditions for the first conditional mobility may be reconfigured, updated, or modified for the second conditional mobility. Similarly, at least some of the information in the security key configuration (e.g., sk-Counter, Next Hop (NH), NH Chaining Count (NCC)) or security key information (e.g., SN Security Key) for the first conditional mobility may be reconfigured, updated, or modified for the second conditional mobility. The type of the second conditional mobility may be different from the type of the first conditional mobility. For example, the first conditional mobility may be a CPA, while the second conditional mobility may be an inter-SN CPC or an intra-SN CPC. Alternatively, the first conditional mobility may be an inter-SN CPC, while the second conditional mobility may be an intra-SN CPC.

This feature or mode of operation may be referred to as, for example, but not limited to, selective cell activation, selective cell group (CG) activation, selective SCG activation, adaptive cell switch, adaptive CG switch, adaptive SCG switch, subsequent cell change, subsequent CG change, subsequent CG selection, CPC kept, or CHO kept. For ease of explanation, in the following example embodiments, the feature or mode of operation is referred to as selective CG activation or selective cell activation. The term "selective CG activation" may be used for conditional mobility (e.g., CPA, inter-SN CPC, intra-SN CPC) with MR-DC. On the other hand, the term "selective cell activation" may be used for conditional mobility (e.g., CHO) that does not necessarily involve MR-DC.

In this specification, the combination of a candidate Special Cell (SpCell) and one or more SCells may be referred to as a candidate Cell Group (CG) set for conditional mobility or selective CG activation. Selective CG activation can be thought of as changing or switching the serving SCG among multiple candidate CG sets. A candidate CG set contains at least a candidate SpCell and optionally one or more SCells. A candidate cell (candidate SpCell) may be a current SCell (i.e., an SCell in the current SCG) or a non-serving cell that is not currently provided to the UE 3. The UE 3 may be configured with multiple candidate CG sets with different candidate SpCells. In the case of conditional mobility (e.g., CHO) with respect to the MCG, candidate SpCells are candidate PCells, and multiple candidate CG sets are multiple candidate MCG sets. On the other hand, in the case of conditional mobility with respect to the SCG (e.g., CPA, intra-SN CPC, inter-SN CPC), candidate SpCells are candidate PSCells, and multiple candidate CG sets are multiple candidate SCG sets.

The terms "MN RRC Message", "MN RRC Reconfiguration Message", "SN RRC Message", and "SN RRC Reconfiguration Message" are used herein. These terms are used for convenience only to distinguish RRC messages generated by the MN from RRC messages generated by the SN. Accordingly, MN RRC messages and MN RRC Reconfiguration messages may be referred to simply as RRC messages and RRC Reconfiguration messages. Similarly, SN RRC messages and SN RRC Reconfiguration messages may be referred to simply as RRC messages and RRC Reconfiguration messages.

### First Example Embodiment

This example embodiment provides improved CHO, intra-SN CPC, and inter-SN CPC for selective CG/cell activation. In particular, this example embodiment relates to the reuse of conditional mobility execution conditions in a subsequent conditional mobility. An example configuration of a radio communication system according to this example embodiment may be the same as the example shown in Fig. 1, Fig. 2, or Fig. 3.

In the first implementation, the UE 3 reuses an execution condition with respect to a candidate target cell of a first conditional mobility in a subsequent second conditional mobility, while switching the reference cell in the execution condition from the source cell of the first conditional mobility to the candidate target cell selected in the first conditional mobility. The first conditional mobility may be a CHO, an intra-SN CPC, or an inter-SN CPC. This inter-SN CPC may be an SN-initiated inter-SN CPC initiated by the source SN 2. When the first conditional mobility is a CPC, the candidate target cell implies a candidate (target) PSCell. For example, the first and second conditional mobilities can both be CHOs. The first and second conditional mobilities can both be intra-SN CPCs. Alternatively, the first conditional mobility can be an SN-initiated inter-SN CPC and the second conditional mobility can be an intra-SN CPC or an inter-SN CPC.

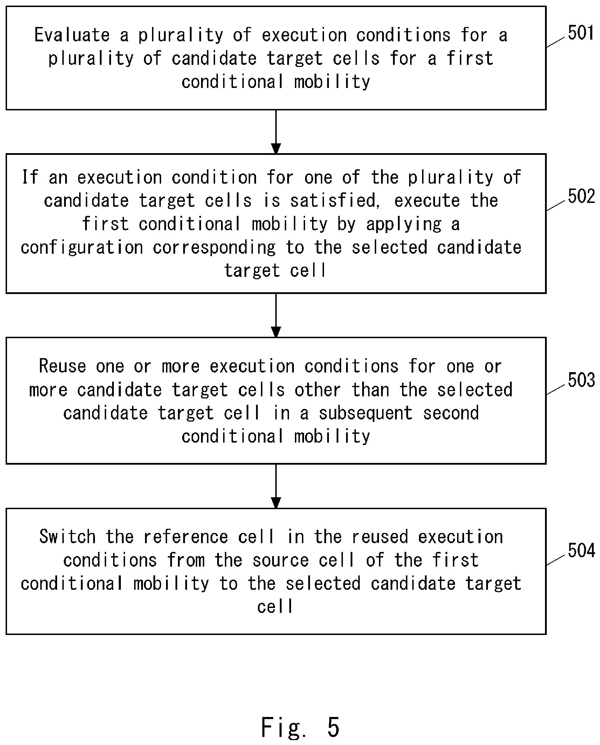

Fig. 5 shows an example of the operation of the UE 3 with respect to the first implementation described above. In step 501, the UE 3 evaluates a plurality of execution conditions for a plurality of candidate target cells for a first conditional mobility. In step 502, if the execution condition for one of the plurality of candidate target cells is satisfied, the UE 3 performs the first conditional mobility by applying a configuration corresponding to the selected candidate target cell (i.e., the candidate target cell whose execution condition is satisfied). In step 503, the UE 3 reuses one or more execution conditions for one or more candidate target cells other than the selected candidate target cell in a subsequent second conditional mobility. In step 504, the UE 3 switches the reference cell in the reused execution conditions from the source cell of the first conditional mobility to the selected candidate target cell.

An execution condition for the first conditional mobility, i.e., a condition or criterion that triggers a conditional mobility event, may be similar to that for a measurement reporting event, e.g., CondEvent A3 or CondEvent A5. The reference cell in CondEvent A3 or CondEvent A5 is the source cell if the first conditional mobility is a CHO and the source PSCell if it is an intra-SN CPC or an SN-initiated inter-SN CPC. In the case where the first conditional mobility is a CHO, the UE 3 switches the reference cell in the execution condition to be reused (e.g., CondEvent A3 or CondEvent A5) from the source cell of the CHO to the selected candidate target cell. In the case where the first conditional mobility is an intra-SN CPC or an SN-initiated inter-SN CPC, the UE 3 switches the reference cell in the execution condition to be reused (e.g., CondEvent A3 or CondEvent A5) from the source PSCell of the CPC to the selected candidate PSCell. In other words, the UE 3 autonomously updates or modifies the reference cell of the execution conditions of the first conditional mobility. This allows the UE 3 to start evaluating the execution conditions for the subsequent second conditional mobility without receiving a signal to update the execution conditions.

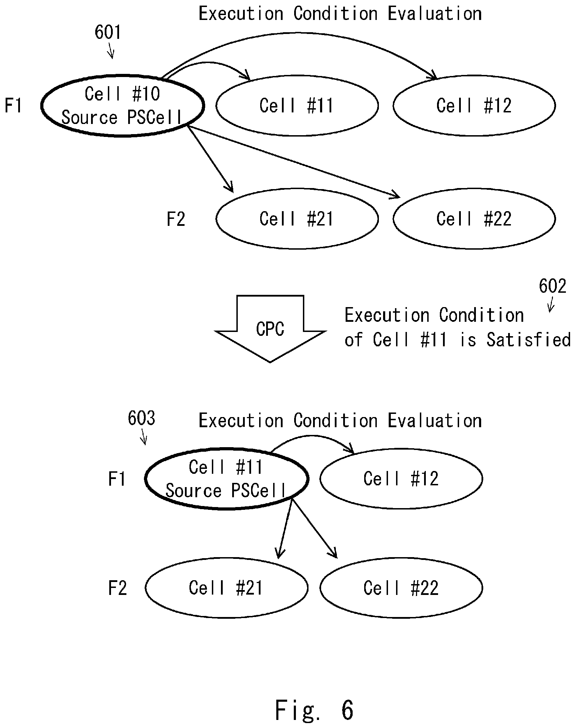

Fig. 6 illustrates an example of autonomous update or modification of execution conditions by the UE 3 in an intra-SN CPC and an SN-initiated inter-SN CPC. In step 601, the UE 3 uses the source PSCell (i.e., cell #10) of a CPC as a reference cell and compares the quality of the source PSCell with the quality of each of the four candidate PSCells (i.e., cells #11, #12, #21, and #22) (e.g., CondEvent A3). In step 602, the UE 3 performs a PSCell change to cell #11 in response to the execution condition for cell #11 being satisfied. In step 603, the UE 3 switches the reference cell in the execution conditions for the three unselected candidate PSCells (i.e., cells #12, #21, and #22) to the new source PSCell (i.e., cell #11). The UE 3 then initiates the evaluation of the execution conditions for the second conditional mobility.

In the second implementation, the RAN node providing a candidate target cell selected by the UE 3 in a first conditional mobility updates the execution conditions of non-selected candidate target cells for a subsequent second conditional mobility. As in the first implementation, the first conditional mobility may be a CHO, an intra-SN CPC, or an inter-SN CPC. This inter-SN CPC may be an SN-initiated inter-SN CPC initiated by the source SN 2. When the first conditional mobility is a CPC, the candidate target cell implies a candidate (target) PSCell. For example, the first and second conditional mobilities can both be CHOs. The first and second conditional mobilities can both be intra-SN CPCs. Alternatively, the first conditional mobility can be an SN-initiated inter-SN CPC and the second conditional mobility can be an intra-SN CPC or an inter-SN CPC. In the case where the first conditional mobility is a CHO, the RAN node providing the candidate target cell is a candidate target node (e.g., target node 7). In the case where the first conditional mobility is an intra-SN CPC within the SN 2, the RAN node providing a candidate target cell is the SN 2. In the case where the first conditional mobility is an inter-SN CPC, the RAN node providing the candidate target cell is a candidate target SN (e.g., candidate SN 4). That is, the UE 3 receives updated or modified execution conditions from the RAN node providing the selected candidate target cell. This allows the UE 3 to start evaluating the execution conditions for the subsequent second conditional mobility.

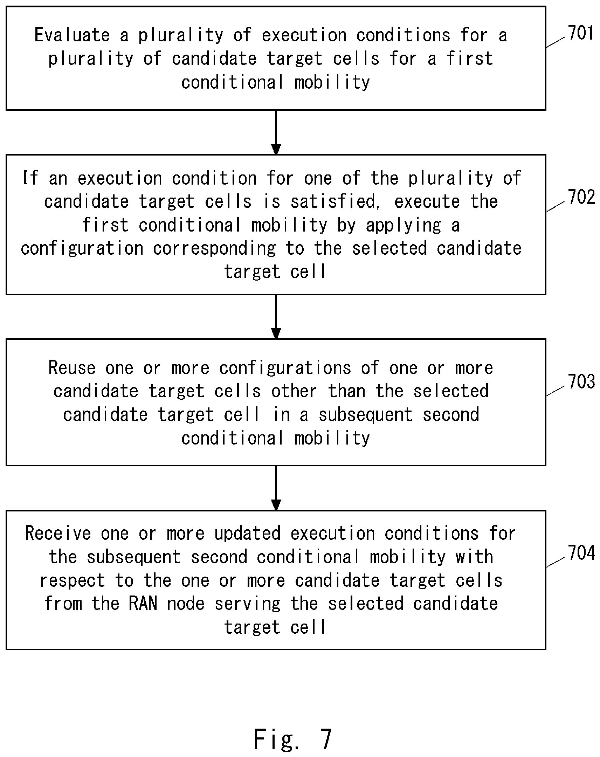

Fig. 7 shows an example of the operation of the UE 3 with respect to the second implementation described above. Steps 701 and 702 are the same as steps 501 and 502 in Fig. 5. In step 703, the UE 3 reuses one or more configurations (e.g., one or any combination of RB configuration, radio resource configuration, SCG configuration, and SCG radio resource configuration) of one or more candidate target cells other than the selected candidate target cell in a subsequent second conditional mobility. In step 704, the UE 3 receives one or more updated execution conditions for the subsequent second conditional mobility with respect to the one or more candidate target cells from the RAN node serving the selected candidate target cell. In particular, when the second conditional mobility is a CHO, the UE 3 may receive the updated execution conditions via a direct signaling radio bearer (e.g., SRB1) with the candidate target node 7. When the second conditional mobility is an intra-SN CPC, the UE 3 may receive the updated execution conditions via a direct signaling radio bearer (e.g., SRB3) with the SN 2 or the candidate SN 4, or via the MN 1. When the second conditional mobility is an inter-SN CPC, the UE 3 may receive the updated execution conditions via a direct signaling radio bearer (e.g., SRB3) with the candidate SN 4, or via the MN 1.

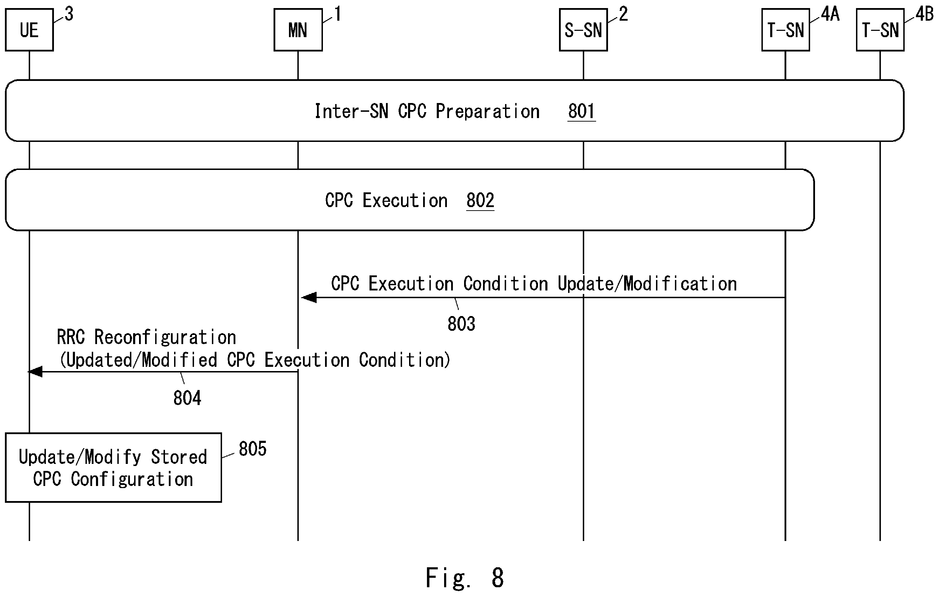

Fig. 8 shows an example of signaling in an inter-SN CPC (or conditional SN change) procedure for the second implementation described above. In step 801, an inter-SN CPC is prepared with respect to a plurality of candidate PSCells provided by the two candidate (target) SNs 4A and 4B. In step 802, the UE 3 selects a candidate PSCell provided by the candidate SN 4A and performs a PSCell change to the selected candidate PSCell. Accordingly, the candidate SN 4A becomes the new serving SN for the UE 3. In steps 803 and 804, the candidate SN 4A provides updated or modified CPC execution conditions to the UE 3 via the MN 1. In step 805, the UE 3 updates or modifies the CPC execution conditions of the unselected PSCell(s), i.e., the CPC execution conditions prepared in step 801, with the CPC execution conditions received in step 804. For the transmission of the updated or modified CPC execution conditions to the UE 3 in steps 803 and 804, an SN-initiated SN Modification with MN involvement procedure may be used. Specifically, in step 803, the candidate SN 4 may send the updated or modified CPC execution conditions (e.g., an SN RRC configuration message containing the CPC execution conditions) to the MN 1 via an SN Modification Required message. In step 804, the MN 1 may transmit the CPC execution conditions received from the candidate SN 4A (e.g., the SN RRC configuration message containing the CPC execution conditions) to the UE 3 via an MN RRC Reconfiguration message.

The operations of the MN 1, candidate SN 4, and UE 3 shown in Fig. 8 may be modified as follows. The MN 1 may reconfigure, update or modify security key information (e.g., SN Security Key) to make it suitable for selective CG activation and send it to the candidate SN 4 (e.g., 4A) selected by the UE 3 in the first conditional mobility (inter-SN CPC). For example, the MN 1 may send the security key information to the selected candidate SN 4 (e.g., 4A) in step 802 or after step 802. In addition, the MN 1 may reconfigure, update or modify at least part of the information in a security key configuration (e.g., sk-Counter, Next Hop (NH), NH Chaining Count (NCC)) to make it suitable for selective CG activation, and transmit it to the UE 3.

The MN 1 may reconfigure, update or modify security key information (e.g., SN Security Key) to make it suitable for selective CG activation and send it to the candidate SN 4 (e.g., 4B) not selected by the UE 3 in the first conditional mobility (inter-SN CPC). For example, the MN 1 may send the security key information to the non-selected candidate SN 4 (e.g., 4B) after step 802. In addition, the MN 1 may reconfigure, update or modify at least part of the information in a security key configuration (e.g., sk-Counter, Next Hop (NH), NH Chaining Count (NCC)) to make it suitable for selective CG activation, and transmit it to the UE 3.

### Second Example Embodiment

This example embodiment provides improved CHO, intra-SN CPC, and inter-SN CPC for selective CG/cell activation. In particular, this example embodiment provides improvements to allow the source cell of a conditional mobility to be used as one of the candidate target cells of a subsequent conditional mobility. An example configuration of a radio communication system according to this example embodiment may be the same as the example shown in Fig. 1, Fig. 2, or Fig. 3.

After a first conditional mobility, the UE 3 maintains or retains a configuration of the source cell of the first conditional mobility for reuse in a subsequent second conditional mobility in which that source cell is a new candidate target cell. The first conditional mobility may be a CHO, an intra-SN CPC, or an inter-SN CPC. In the case where the first conditional mobility is a CPC, the source cell means the source PSCell. For example, the first and second conditional mobilities can both be CHOs. The first and second conditional mobilities can both be intra-SN CPCs. Alternatively, the first conditional mobility can both be inter-SN CPCs.

The UE 3 may receive, from the RAN node serving the selected candidate target cell, an execution condition for the second conditional mobility with respect to the new candidate target cell corresponding to the source cell in the first conditional mobility. In particular, if the first and second conditional mobilities are CHOs, the UE 3 may receive this execution condition via a direct signaling radio bearer (e.g., SRB1) with the candidate target node 7. If the first and second conditional mobilities are intra-SN CPCs, the UE 3 may receive this execution condition via a direct signaling radio bearer (e.g., SRB3) with the SN 2, or via the MN 1. If the first and second conditional mobilities are inter-SN CPCs, the UE 3 may receive this execution condition via a direct signaling radio bearer (e.g., SRB3) with the candidate SN 4, or via the MN 1. In this case, the second conditional mobility is, or can be considered as, an inter-SN CPC. Alternatively, if the first and second conditional mobilities are inter-SN CPCs, the UE 3 may receive from the MN 1 the execution condition for the second conditional mobility with respect to the new candidate target cell corresponding to the source cell in the first conditional mobility. In this case, the second conditional mobility is, or can be considered as, an MN-initiated inter-SN CPC.

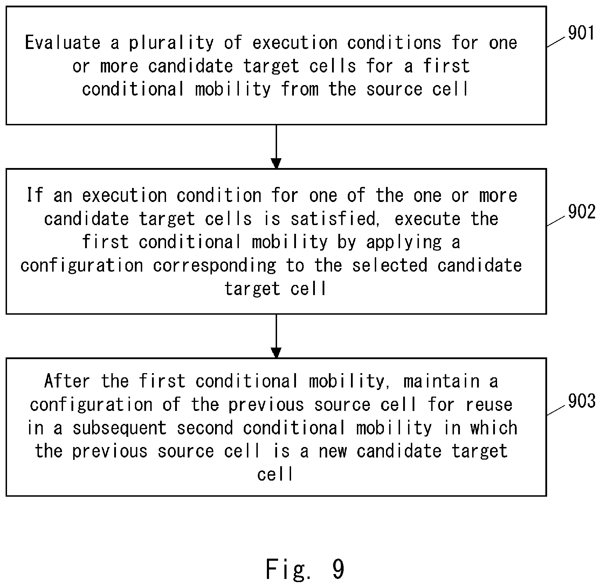

Fig. 9 shows an example of the operation of the UE 3. In step 901, the UE 3 evaluates a plurality of execution conditions for one or more candidate target cells for a first conditional mobility from the source cell. In step 902, if an execution condition is satisfied with respect to one of the one or more candidate target cells, the UE 3 executes the first conditional mobility by applying a configuration corresponding to the selected candidate target cell (i.e., the candidate target cell whose execution condition is satisfied). In step 903, after the first conditional mobility, the UE 3 maintains a configuration of the previous source cell for reuse in a subsequent second conditional mobility in which the previous source cell is a new candidate target cell.

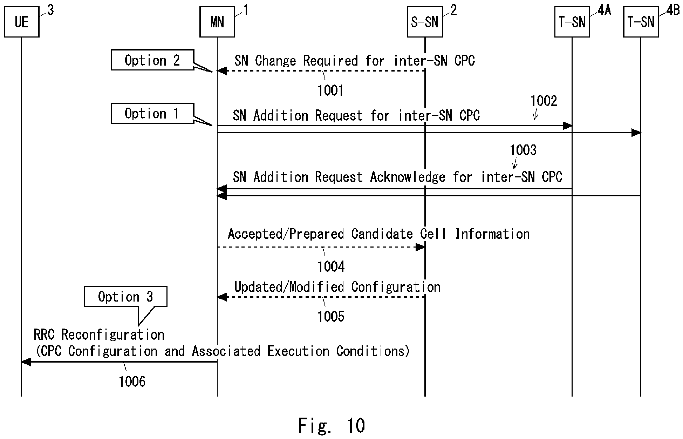

Fig. 10 shows an example of signaling during the preparation phase of an inter-SN CPC (or conditional SN change) procedure. In step 1001, when the source SN 2 initiates an inter-SN CPC, the source SN 2 sends an SN Change Required message to the MN 1. The SN Change Required message contains a list of proposed PSCell candidates recommended by the source SN 2, and associated CPC execution conditions. Step 1001 is omitted in the case of an MN-initiated inter-SN CPC.

In step 1002, the MN 1 sends an SN Addition Request message to each of one or more candidate target SNs 4 (e.g., SN 4A and 4B). The SN Addition Request message includes a list of PSCell candidates. The list indicates one or more candidate PSCells proposed by the MN 1 in the case of an MN-initiated inter-SN CPC, or one or more candidate PSCells proposed by the source SN 2 in the case of an SN-initiated inter-SN CPC.

In step 1003, each candidate target SN 4 sends an SN Addition Request Acknowledge message to the MN 1. The SN Addition Request Acknowledge message includes a configuration of each of one or more candidate PSCells prepared by the candidate target SN 4. As already described, the configuration of each candidate PSCell may be one or any combination of an RB configuration, a CG configuration, an SCG configuration, an SCG radio resource configuration, and an SN RRC Reconfiguration message.

For an inter-SN CPC, step 1004 or steps 1004 and 1005 may be performed. In step 1004, the MN 1 may indicate to the source SN 2 the one or more candidate PSCells accepted by the candidate target SN 4, if necessary, for example, if the candidate target SN 4 has not accepted all the candidate PSCells proposed by the source SN 2. In step 1005, the source SN 2 may provide the MN 1 with an updated or modified configuration (e.g., measurement configuration or CPC execution conditions) for the CPC.

In step 1006, the MN 1 transmits to the UE 3 an MN RRC Reconfiguration message (RRC Reconfiguration*) containing the CPC configuration (e.g., condRRCReconfig) and the associated CPC execution conditions. The CPC configuration of an Inter-SN CPC is a list of one or more MN RRC Reconfiguration messages (RRC Reconfiguration**). Each MN RRC Reconfiguration message (RRC Reconfiguration**) contains the configuration of a candidate PSCell (i.e., an SN RRC Reconfiguration message (RRC Reconfiguration***)) received from the candidate SN. The CPC configuration (i.e., the list of MN RRC Reconfiguration messages (RRC Reconfiguration**)) and the associated CPC execution conditions are contained in Conditional Mobility Configuration Information (e.g., a conditionalReconfiguration IE) within the MN RRC Reconfiguration message (RRC Reconfiguration*).

In an example, as shown in Fig. 10 as Option 1, the MN 1 informs each candidate SN 4 that the source SN 2 or the source PSCell is subject to selective CG activation. The MN 1 may include an indication of this (e.g., "S-SN kept" or "Source PSCell kept") in the SN Addition Request message (step 1002).

In an example, as shown in Fig. 10 as Option 2, the SN 2 informs the MN 1 that the application of selective CG activation to the source SN 2 or the source PSCell is requested, recommended, or available. The SN 2 may include an indication of this (e.g., "S-SN kept" or "Source PSCell kept") in the SN Change Required message (step 1001).

In an example, as shown in Fig. 10 as Option 3, the MN 1 informs the UE 3 that the source SN 2 or the source PSCell is subject to selective CG activation. The MN 1 may include an indication of this (e.g., "S-SN kept" or "Source PSCell kept") in the MN RRC Reconfiguration message (step 1006). Options 1, 2, and 3 described above may be used or implemented in combination as appropriate.

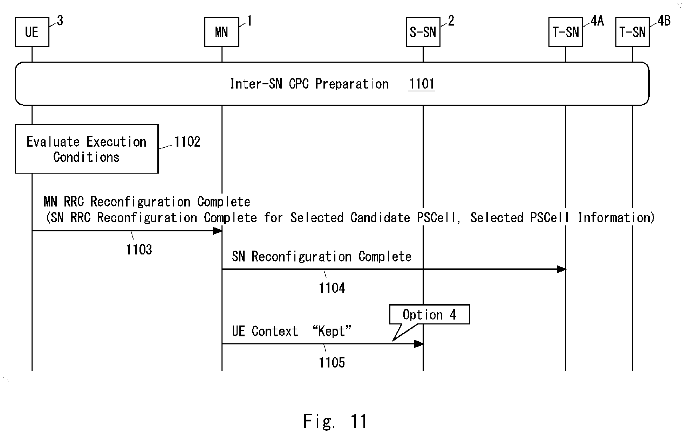

Fig. 11 shows an example of signaling during the execution phase of an inter-SN CPC (or conditional SN change) procedure. Step 1101 in Fig. 11 corresponds to steps 1001 to 1006 in Fig. 10. In step 1202, the UE 3 evaluates the CPC execution conditions. If the execution condition for a candidate PSCell is satisfied, the UE 3 sends the corresponding MN RRC Reconfiguration Complete message to the MN 1 (step 1203). This MN RRC Reconfiguration Complete message contains the SN RRC Reconfiguration Complete message for the candidate PSCell whose execution condition has been met (i.e., the selected candidate PSCell) and also contains information about the selected candidate PSCell. The information about the selected candidate PSCell may be provided implicitly (or indirectly) by an identifier (e.g., CondReconfigId) associated with the candidate PSCell configuration and CPC execution condition(s) (e.g., condExecutionCond or condExecutionCondSN). In step 1104, the MN 1 sends an SN Reconfiguration Complete message to the candidate SN 4 (i.e., selected candidate SN 4) (e.g., 4A) that provides the selected candidate PSCell. The SN Reconfiguration Complete message contains the SN RRC Reconfiguration Complete message received from UE 3.

The MN 1 notifies the source SN 2 that the source SN 2 or the source PSCell is subject to selective CG activation. This notification may be made when the inter-SN CPC initiation is determined by the MN 1. In an example, as shown in step 1105 of Fig. 11 as Option 4, instead of a UE Context Release message, the MN 1 may send a new Xn/X2 message (e.g., UE Context Kept) to the source SN 2 indicating that the UE context needs to be maintained. Alternatively, the MN 1 may send an indication of this (e.g., "S-SN kept" or "Source PSCell kept") to the source SN 2 during the CPC preparation phase (step 1101 or Fig. 10). Here, the source SN 2 becomes a new candidate SN 4 (e.g., 4C).

The operations of the MN 1, candidate SN 4, and UE 3 shown in Fig. 11 may be modified as follows. The MN 1 may reconfigure, update or modify security key information (e.g., SN Security Key) to make it suitable for selective CG activation and send it to the candidate SN 4 (e.g., 4A) selected by the UE 3 in the first conditional mobility (inter-SN CPC). For example, the MN 1 may send the security key information to the selected candidate SN 4 (e.g., 4A) in step 1104 or after step 1104. In addition, the MN 1 may reconfigure, update or modify at least part of the information in a security key configuration (e.g., sk-Counter, Next Hop (NH), NH Chaining Count (NCC)) to make it suitable for selective CG activation, and transmit it to the UE 3.

The MN 1 may reconfigure, update or modify security key information (e.g., SN Security Key) to make it suitable for selective CG activation and send it to the candidate SN 4 (e.g., 4B) not selected by the UE 3 in the first conditional mobility (inter-SN CPC). For example, the MN 1 may send the security key information to the non-selected candidate SN 4 (e.g., 4B) after step 1104. In addition, the MN 1 may reconfigure, update or modify at least part of the information in a security key configuration (e.g., sk-Counter, Next Hop (NH), NH Chaining Count (NCC)) to make it suitable for selective CG activation, and transmit it to the UE 3.

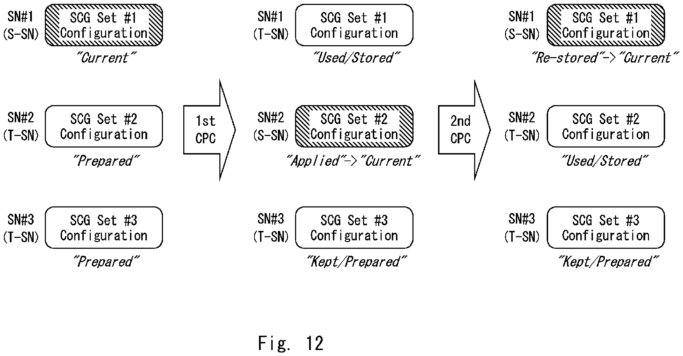

Fig. 12 shows an example where the UE 3 performs an inter-SN CPC (or conditional SN change) procedure as a first conditional mobility, and then performs another inter-SN CPC (or conditional SN change) procedure as a second conditional mobility. Prior to the execution of the first inter-SN CPC, SN #1 (e.g., SN 2) is the source SN, and SN #2 (e.g., SN 4A) and SN #3 (e.g., SN 4B) are the candidate SNs. SN #1 provides (S)CG set #1 to the UE 3. SN #2 (e.g., SN 4A) and SN #3 (e.g., SN 4B) prepare (S)CG set #2 and (S)CG set #3, respectively, for the UE 3. Upon satisfaction of an execution condition for a candidate PSCell that is served by SN #2, the UE 3 applies a configuration of this selected candidate PSCell. In other words, the UE 3 applies information (or configuration or configuration information) about the selected (S)CG set #2. At this point, the UE 3 retains (or stores) a configuration of the source PSCell. In other words, the UE 3 retains information (or configuration or configuration information) about the source (S)CG set #1, which contains the source PSCell. Similarly, the UE 3 retains information about (S)CG set #3, which contains the non-selected candidate PSCell. Then, in response to the satisfaction of an execution condition for a candidate PSCell (i.e., the previous source PSCell) prepared by SN#1, which was the source SN in the first CPC, the UE 3 applies (or restores) the retained information about (S)CG set #1 and executes a CPC to it. According to the current provisions of 3GPP Release 16 and the current discussion on Release 17, the UE 3 cannot perform the second CPC to (S)CG set #1 containing the previous source PSCell, because the UE 3 releases the source PSCell information when performing the first inter-SN CPC. In contrast, this example embodiment allows it. After the second CPC, the UE 3 continues to retain the information about (S)CG set #3, which contains the non-selected candidate PSCell. After the second CPC, the UE 3 may retain information about (S)CG set #2, which contains the source PSCell of the second CPC.

The operations of the UE 3 and procedures described in this example embodiment allow the use of the source cell of a conditional mobility as one of the candidate target cells of a subsequent conditional mobility.

### Third Example Embodiment

This example embodiment provides improved CHO and inter-SN CPC for selective CG/cell activation. In particular, this example embodiment would contribute to solving a problem caused by the use of a delta configuration. An example configuration of a radio communication system according to this example embodiment may be the same as the example shown in Fig. 1 or Fig. 3.

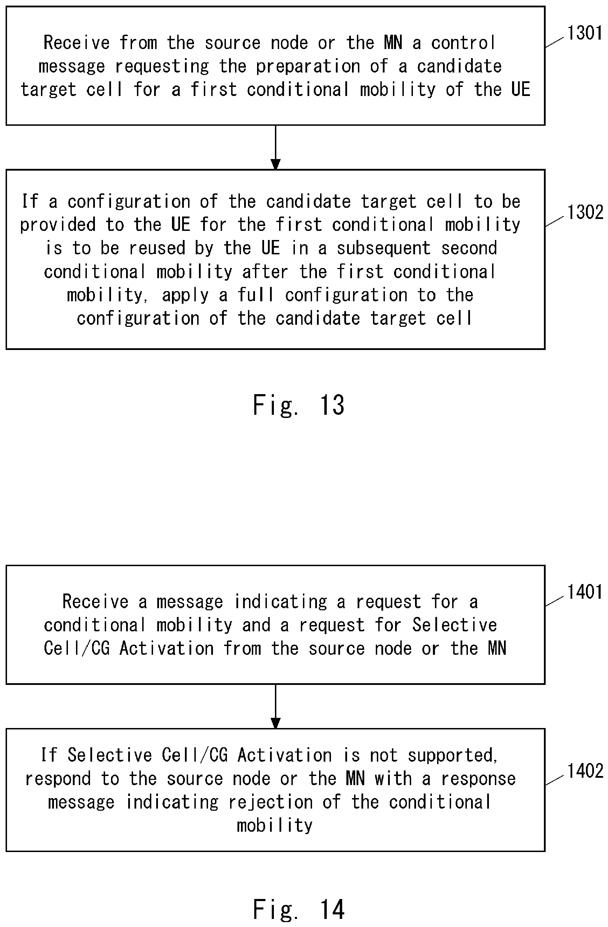

An example of the operation of a RAN node providing a candidate target cell for a first conditional mobility is described below with reference to Fig. 13. In the case where the first conditional mobility is a CHO, the RAN node providing the candidate target cell is the candidate target node 7. When the first conditional mobility is an inter-SN CPC, the RAN node providing the candidate target cell is the candidate target SN 4.

In step 1301, the RAN node receives a control message from the source node (e.g., the source node 6 or the source SN 2) or from the MN 1 requesting the preparation of a candidate target cell for the first conditional mobility of the UE 3.

In step 1302, the RAN node determines whether a configuration of the candidate target cell to be provided to the UE 3 for the first conditional mobility is to be reused by the UE 3 for a subsequent second conditional mobility. If the configuration of the candidate target cell is to be reused for a subsequent second conditional mobility, the RAN node applies a full configuration to the configuration of the candidate target cell without applying a delta configuration based on a configuration of the current source cell. The delta configuration may also be referred to as delta config or delta signaling, and the full configuration may also be referred to as full config or full signaling. Note that in this example embodiment, a delta configuration based on an RB configuration of the source cell may be applied to an RB configuration in the configuration of the candidate target cell.

In one example, the RAN node may determine, based on receiving an indication of selective CG/cell activation from the source node (e.g., the source node 6 or the source SN 2) or from the MN 1, that the configuration of the candidate target cell is to be reused for a subsequent second conditional mobility. In another example, the RAN node may autonomously determine whether selective CG/cell activation is to be performed, used, prepared, or recommended. In other words, the RAN node may autonomously determine whether the configuration of the candidate target cell is to be reused for a subsequent second conditional mobility.

According to the operation of the RAN node described in this example embodiment, when selective CG/cell activation is performed, used, prepared, or recommended, a full configuration is applied to the configuration of a candidate target cell for a first conditional mobility. This allows the configuration of the candidate target cell for the first conditional mobility to be easily reused after a subsequent second conditional mobility is performed. In other words, the new serving RAN node after the subsequent second conditional mobility does not necessarily need to perform an RRC Reconfiguration before resuming data communication with the UE 3. This example embodiment can thus help to solve a problem caused by the use of a delta configuration.

### Fourth Example Embodiment

This example embodiment provides improved CHO, CPA, and inter-SN CPC for selective CG/cell activation. In particular, this example embodiment relates to handling the case where there is a target node or target SN that does not support selective CG/cell activation. An example configuration of a radio communication system according to this example embodiment may be the same as the example shown in Fig. 1, Fig. 2, or Fig. 3.

One example of the operation of a RAN node providing a candidate target cell for a first conditional mobility is described below with reference to Fig. 14. In the case where the first conditional mobility is a CHO, the RAN node providing the candidate target cell is the candidate target node 7. When the first conditional mobility is a CPA, the RAN node providing the candidate target cell is the candidate SN 2. If the first conditional mobility is an inter-SN CPC, the RAN node providing the candidate target cell is the candidate target SN 4.

In step 1401, the RAN node receives from the source node 6 or the MN 1 a message indicating a request for a conditional mobility and a request for selective CG/cell activation. In step 1402, the RAN node responds to the source node 6 or the MN 1 with a response message indicating rejection of the conditional mobility if it does not support selective CG/cell activation. In other words, if the RAN node does not support selective CG/cell activation, the RAN node rejects the preparation for the conditional mobility, regardless of whether or not it can prepare a candidate target cell for the conditional mobility.

For example, the MN 1 may send an indication of a request for selective CG activation to the candidate SN 2 in conjunction with a CPA request or CPC request. Specifically, the MN 1 may include an indication of the request for selective CG activation as a sub-information element (IE) of a CPA request or CPC request in an SN Addition Request message. The CPA request may be indicated by a Conditional PSCell Addition Information Request IE. On the other hand, the CPC request may be indicated by a Conditional PSCell Addition Information Request IE or a Conditional PSCell Change Information Request IE. Similarly, the source node 6 may associate an indication of the request for selective cell activation with a CHO request to be sent to the candidate target node 7 and may include it as a sub-IE of a CHO request in a Handover Request message for CHO. The CHO request may be indicated by a Conditional Handover Information Request IE. If the RAN node does not support selective CG/cell activation, the RAN node may respond to the MN 1 or the source node 6 with a CPA request reject, CPC request reject, or CHO request reject message.

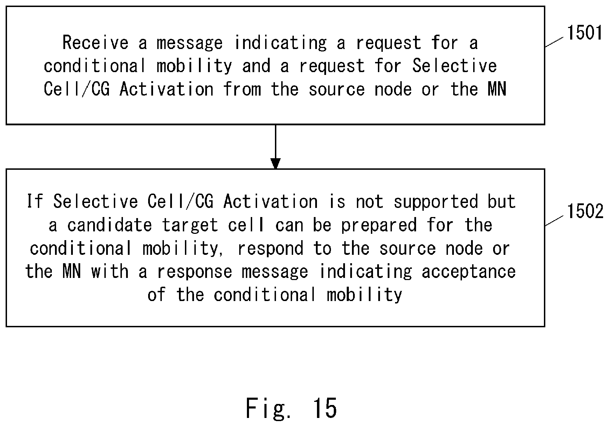

Fig. 15 shows another example of the operation of the RAN node providing a candidate target cell for the first conditional mobility. In step 1501, the RAN node receives from the source node 6 or the MN 1 a message indicating a request for a conditional mobility and a request for selective CG/cell activation. In step 1502, if the RAN node does not support selective CG/cell activation but can prepare a candidate target cell for the conditional mobility, it responds to the source node 6 or the MN 1 with a response message indicating acceptance of the conditional mobility. In other words, even if the RAN node does not support selective CG/cell activation, the RAN node accepts the preparation as long as it can prepare a candidate target cell for the conditional mobility.

For example, the MN 1 may include in an SN Addition Request message an IE indicating a request for selective CG activation independent of an IE for a CPA request or a CPC request. Similarly, the source node 6 may include in a Handover Request message an IE indicating a request for selective CG activation independent of an IE for a CHO request. If the RAN node does not support selective CG/cell activation, the RAN node may ignore the IE indicating a request for selective CG/cell activation and respond with an SN Addition Request Acknowledge message. Conversely, if the RAN node supports selective CG/cell activation, the RAN node may consider the IE indicating a request for selective CG/cell activation and respond with an SN Addition Request Acknowledge message. If the RAN node supports selective CG/cell activation, it sends information indicating acceptance or non-acceptance of selective CG/cell activation to the MN 1 or the source node 6. This information can be per candidate target cell. If the RAN node supports selective CG/cell activation but does not accept to perform or apply selective CG/cell activation, the RAN node may send a SN Addition Request Acknowledge message containing information indicating that selective CG/cell activation is not acceptable.

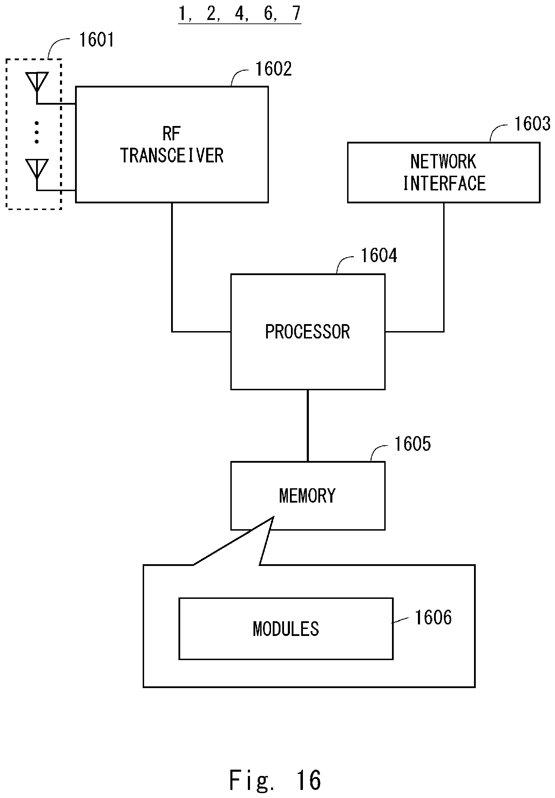

Example configurations of the RAN nodes 1, 2, 4, 6 and 7 and the UE 3 according to the above-described example embodiments are given below. Fig. 16 is a block diagram showing an example configuration of the RAN node 1 according to the example embodiments described above. The configuration of the RAN nodes 2, 4, 6 and 7 may be the same as that shown in Fig. 16. Referring to Fig. 16, the RAN node 1 includes a Radio Frequency transceiver 1601, a network interface 1603, a processor 1604, and a memory 1605. The RF transceiver 1601 performs analog RF signal processing to communicate with UEs including the UE 3. The RF transceiver 1601 may include a plurality of transceivers. The RF transceiver 1601 is coupled to an antenna array 1602 and the processor 1604. The RF transceiver 1601 receives modulation symbol data from the processor 1604, generates a transmission RF signal, and supplies the transmission RF signal to the antenna array 1602. The RF transceiver 1601 generates a baseband reception signal based on a reception RF signal received by the antenna array 1602 and supplies the baseband reception signal to the processor 1604. The RF transceiver 1601 may include an analog beamformer circuit for beamforming. The analog beamformer circuit includes, for example, a plurality of phase shifters and a plurality of power amplifiers.

The network interface 1603 is used to communicate with network nodes (e.g., the RAN nodes 2 and 4, and control and transfer nodes in the core network). The network interface 1603 may include, for example, a Network Interface Card (NIC) that complies with the IEEE 802.3 series.

The processor 1604 performs digital baseband signal processing (data-plane processing) and control-plane processing for radio communication. The processor 1604 may include a plurality of processors. For example, the processor 1604 may include a modem processor (e.g., Digital Signal Processor (DSP)) for performing the digital baseband signal processing and a protocol stack processor (e.g., Central Processing Unit (CPU) or Micro Processing Unit (MPU)) for performing the control-plane processing.

For example, digital baseband signal processing by the processor 1604 may include signal processing in the Service Data Adaptation Protocol (SDAP) layer, the Packet Data Convergence Protocol (PDCP) layer, the Radio Link Control (RLC) layer, the Medium Access Control (MAC) layer, and the Physical (PHY) layer. Control plane processing by the processor 1604 may include processing of Non-Access Stratum (NAS) messages, RRC messages, MAC Control Elements (CE), and Downlink Control Information (DCI).

The processor 1604 may include a digital beamformer module for beamforming. The digital beamformer module may include a Multiple Input Multiple Output (MIMO) encoder and precoder.

The memory 1605 is composed of a combination of a volatile memory and a non-volatile memory. The volatile memory is, for example, a Static Random Access Memory (SRAM), a Dynamic RAM (DRAM), or a combination thereof. The non-volatile memory may be a Mask Read Only Memory (MROM), an Electrically Erasable Programmable ROM (EEPROM), a flash memory, or a hard disk drive, or any combination thereof. The memory 1605 may include a storage located away from the processor 1604. In this case, the processor 1604 may access the memory 1605 via the network interface 1603 or an I/O interface not shown.

The memory 1605 may store one or more software modules (computer programs) 1606 including instructions and data for performing processing by the RAN node 1 described in the above example embodiments. In some implementations, the processor 1604 may be configured to load and execute the software module(s) 1606 from the memory 1605, thereby performing the processing of the RAN node 1 described in the above example embodiments.

When the RAN node 1 is a CU (e.g., eNB-CU or gNB-CU) or a CU-CP, the RAN node 1 does not need to include the RF transceiver 1601 (and the antenna array 1602).

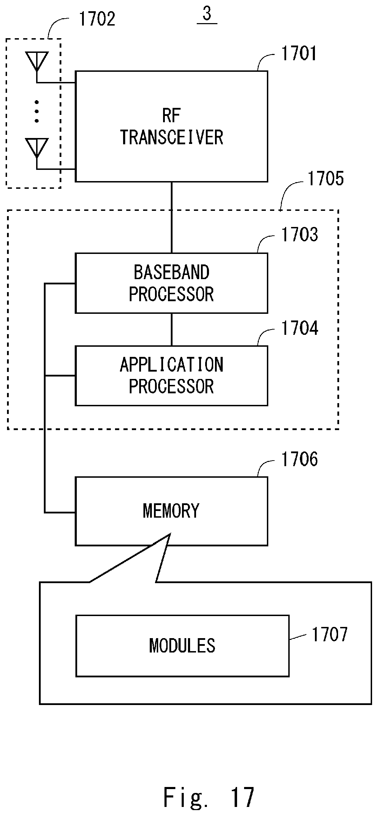

Fig. 17 is a block diagram showing an example configuration of the UE 3. The radio frequency (RF) transceiver 1701 performs analog RF signal processing to communicate with the RAN nodes 1, 2, 4, 6, and 7. The RF transceiver 1701 may include a plurality of transceivers. The analog RF signal processing performed by the RF transceiver 1701 includes frequency up-conversion, frequency downconversion, and amplification. The RF transceiver 1701 is coupled to the antenna array 1702 and the baseband processor 1703. The RF transceiver 1701 receives modulation symbol data (or OFDM symbol data) from the baseband processor 1703, generates a transmission RF signal, and supplies the transmission RF signal to the antenna array 1702. The RF transceiver 1701 generates a baseband reception signal based on the reception RF signal received by the antenna array 1702 and supplies the baseband reception signal to the baseband processor 1703. The RF transceiver 1701 may include an analog beamformer circuit for beamforming. The analog beamformer circuit includes, for example, a plurality of phase shifters and a plurality of power amplifiers.

The baseband processor 1703 performs digital baseband signal processing (data-plane processing) and control-plane processing for wireless communication. The digital baseband signal processing includes (a) data compression/decompression, (b) data segmentation/concatenation, (c) transmission format (transmission frame) composition/decomposition, (d) channel encoding/decoding, (e) modulation (i.e., symbol mapping)/demodulation, and (f) Inverse Fast Fourier Transform (IFFT) generation of OFDM symbol data (baseband OFDM signal). On the other hand, the control-plane processing includes communication management of layer 1 (e.g., transmission power control), layer 2 (e.g., radio resource management, and hybrid automatic repeat request (HARQ) processing), and layer 3 (e.g., signaling regarding attachment, mobility, and call management).

For example, the digital baseband signal processing performed by the baseband processor 1703 may include signal processing in the SDAP layer, PDCP layer, RLC layer, MAC layer, and PHY layer. The control-plane processing performed by the baseband processor 1703 may also include processing of Non-Access Stratum (NAS) protocols, RRC protocols, MAC CEs, and DCIs.

The baseband processor 1703 may perform MIMO encoding and precoding for beamforming.

The baseband processor 1703 may include a modem processor (e.g., DSP) that performs the digital baseband signal processing and a protocol stack processor (e.g., CPU or MPU) that performs the control-plane processing. In this case, the protocol stack processor performing the control-plane processing may be integrated with an application processor 1704 described later.

The application processor 1704 may also be referred to as a CPU, an MPU, a microprocessor, or a processor core. The application processor 1704 may include a plurality of processors (processor cores). The application processor 1704 loads a system software program (Operating System (OS)) and various application programs (e.g., a voice call application, a web browser, a mailer, a camera operation application, a music player application) from a memory 1706 or from another memory (not shown) and executes these programs, thereby providing various functions of the UE 3.

In some implementations, as represented by the dashed line (1705) in Fig. 17, the baseband processor 1703 and the application processor 1704 may be integrated on a single chip. In other words, the baseband processor 1703 and the application processor 1704 may be implemented in a single System on Chip (SoC) device 1705. A SoC device may be referred to as a system Large Scale Integration (LSI) or a chipset.

The memory 1706 is a volatile memory or a non-volatile memory, or a combination thereof. The memory 1706 may include a plurality of physically independent memory devices. The volatile memory is, for example, SRAM, DRAM, or a combination thereof. The non-volatile memory may be MROM, an EEPROM, a flash memory, a hard disk drive, or any combination thereof. The memory 1706 may include, for example, an external memory device that can be accessed by the baseband processor 1703, the application processor 1704, or the SoC 1705. The memory 1706 may include an internal memory device that is integrated into the baseband processor 1703, the application processor 1704, or the SoC 1705. Further, the memory 1706 may include a memory in a Universal Integrated Circuit Card (UICC).

The memory 1706 may store one or more software modules (computer programs) 1707 including instructions and data for processing by the UE 3 described in the above example embodiments. In some implementations, the baseband processor 1703 or the application processor 1704 may load the software module(s) 1707 from the memory 1706 and execute the loaded software module(s) 1707, thereby performing the processing of the UE 3 described in the above example embodiments with reference to the drawings.

The control plane processing and operations performed by the UE 3 described in the above example embodiments may be performed by elements other than the RF transceiver 1701 and the antenna array 1702, i.e., by the memory 1706 storing the software modules 1707 and one or both of the baseband processor 1703 and the application processor 1704.

As described using Figs. 16 and 17, each of the processors in the RAN nodes 1, 2, 4, 6 and 7, and UE 3 according to the above-described example embodiments can execute one or more programs, containing a set of instructions, to cause a computer to perform an algorithm described with reference to the drawings. Each of these programs contains a set of instructions (or software codes) that, when loaded into a computer, causes the computer to perform one or more of the functions described in the example embodiments. Each of these programs may be stored in a non-transitory computer readable medium or a tangible storage medium. By way of example, and not limitation, non-transitory computer readable media or tangible storage media can include a random-access memory (RAM), a read-only memory (ROM), a flash memory, a solid-state drive (SSD) or other memory technologies, CD-ROM, digital versatile disk (DVD), Blu-ray (registered mark) disc or other optical disk storage, magnetic cassettes, magnetic tape, magnetic disk storage or other magnetic storage devices. Each program may be transmitted on a transitory computer readable medium or a communication medium. By way of example, and not limitation, transitory computer readable media or communication media can include electrical, optical, acoustical, or other form of propagated signals.

The example embodiments described above are merely examples of applications of the technical ideas obtained by the inventors. These technical ideas are not limited to the example embodiments described above, and various modifications can be made thereto.

For example, the whole or part of the example embodiments disclosed above can be described as, but not limited to, the following supplementary notes.

### (Supplementary Note 1)

A User Equipment (UE) comprising:
at least one memory; and
at least one processor coupled to the at least one memory and configured to:
   evaluate a plurality of execution conditions with respect to a plurality of candidate target cells for a first conditional mobility;
   if an execution condition for one of the plurality of candidate target cells is satisfied, execute the first conditional mobility by applying a configuration corresponding to the one candidate target cell; and
   reuse one or more execution conditions with respect to one or more candidate target cells other than the one candidate target cell in a subsequent second conditional mobility, while switching a reference cell in the one or more execution conditions from a source cell of the first conditional mobility to the one candidate target cell.

### (Supplementary Note 2)

The UE according to Supplementary Note 1, wherein the first conditional mobility is a conditional handover, a conditional Primary Secondary Cell Group (SCG) Cell (PSCell) change, or a conditional Secondary Node (SN) change.

### (Supplementary Note 3)

A method performed by a User Equipment (UE), the method comprising:
evaluating a plurality of execution conditions with respect to a plurality of candidate target cells for a first conditional mobility;
if an execution condition for one of the plurality of candidate target cells is satisfied, executing the first conditional mobility by applying a configuration corresponding to the one candidate target cell; and
reusing one or more execution conditions with respect to one or more candidate target cells other than the one candidate target cell in a subsequent second conditional mobility, while switching a reference cell in the one or more execution conditions from a source cell of the first conditional mobility to the one candidate target cell.

### (Supplementary Note 4)

A non-transitory computer readable medium storing a program for causing a computer to perform a method for a User Equipment (UE), the method comprising:
evaluating a plurality of execution conditions with respect to a plurality of candidate target cells for a first conditional mobility;
if an execution condition for one of the plurality of candidate target cells is satisfied, executing the first conditional mobility by applying a configuration corresponding to the one candidate target cell; and
reusing one or more execution conditions with respect to one or more candidate target cells other than the one candidate target cell in a subsequent second conditional mobility, while switching a reference cell in the one or more execution conditions from a source cell of the first conditional mobility to the one candidate target cell.

### (Supplementary Note 5)

A User Equipment (UE) comprising:
at least one memory; and
at least one processor coupled to the at least one memory and configured to:
   evaluate a plurality of execution conditions with respect to a plurality of candidate target cells for a first conditional mobility;
   if an execution condition for one of the plurality of candidate target cells is satisfied, execute the first conditional mobility by applying a configuration corresponding to the one candidate target cell;
   reuse one or more configurations of one or more candidate target cells other than the one candidate target cell in a subsequent second conditional mobility; and
   receive, from a radio access network (RAN) node of the one candidate target cell, one or more updated execution conditions with respect to the one or more candidate target cells for the subsequent second conditional mobility.

### (Supplementary Note 6)

The UE according to Supplementary Note 5, wherein
the first conditional mobility is a conditional Primary Secondary Cell Group (SCG) Cell (PSCell) change or a conditional Secondary Node (SN) change,
the radio access network (RAN) node is a Secondary Node (SN) in dual connectivity, and
the at least one processor is configured to receive the one or more updated execution conditions from the SN via a Master Node (MN).

### (Supplementary Note 7)

A method performed by a User Equipment (UE), the method comprising:
evaluating a plurality of execution conditions with respect to a plurality of candidate target cells for a first conditional mobility;
if an execution condition for one of the plurality of candidate target cells is satisfied, executing the first conditional mobility by applying a configuration corresponding to the one candidate target cell;
reusing one or more configurations of one or more candidate target cells other than the one candidate target cell in a subsequent second conditional mobility; and
receiving, from a radio access network (RAN) node of the one candidate target cell, one or more updated execution conditions with respect to the one or more candidate target cells for the subsequent second conditional mobility.

### (Supplementary Note 8)

A radio access network (RAN) node comprising:
at least one memory; and
at least one processor coupled to the at least one memory and configured to:
   provide a User Equipment (UE) with a plurality of configurations regarding a plurality of candidate target cells of a first conditional mobility of the UE; and
   if one of the plurality of candidate target cells is selected by the UE, to enable a subsequent second conditional mobility in which one or more configurations of one or more candidate target cells other than the selected candidate target cell are reused by the UE, provide the UE with one or more updated execution conditions with respect to the one or more candidate target cells.

### (Supplementary Note 9)

The RAN node according to Supplementary Note 8, wherein
the first conditional mobility is a conditional Primary Secondary Cell Group (SCG) Cell (PSCell) change or a conditional Secondary Node (SN) change,
the radio access network (RAN) node is a Secondary Node (SN) in dual connectivity, and
the at least one processor is configured to provide the one or more updated execution conditions to the UE via a Master Node (MN).

### (Supplementary Note 10)

A method performed by a radio access network (RAN) node, the method comprising:
providing a User Equipment (UE) with a plurality of configurations regarding a plurality of candidate target cells of a first conditional mobility of the UE; and
if one of the plurality of candidate target cells is selected by the UE, to enable a subsequent second conditional mobility in which one or more configurations of one or more candidate target cells other than the selected candidate target cell are reused by the UE, providing the UE with one or more updated execution conditions with respect to the one or more candidate target cells.

### (Supplementary Note 11)

A User Equipment (UE) comprising:
at least one memory; and
at least one processor coupled to the at least one memory and configured to:
   evaluate a plurality of execution conditions with respect to one or more candidate target cells for a first conditional mobility from a source node;
   if an execution condition for one of the one or more candidate target cells is satisfied, execute the first conditional mobility by applying a configuration corresponding to the one candidate target cell; and
   after the first conditional mobility, maintain a configuration of the source cell for reuse in a subsequent second conditional mobility in which the source cell is a new candidate target cell.

### (Supplementary Note 12)

The UE according to Supplementary Note 11, wherein the at least one processor is configured to receive an execution condition for the second conditional mobility with respect to the new candidate target cell corresponding to the source cell in the first conditional mobility, from a radio access network (RAN) node of the one candidate target cell, or from a Master Node (MN) if the RAN node is a Secondary Node (SN).

### (Supplementary Note 13)

A method performed by a User Equipment (UE), the method comprising:
evaluating a plurality of execution conditions with respect to one or more candidate target cells for a first conditional mobility from a source node;
if an execution condition for one of the one or more candidate target cells is satisfied, executing the first conditional mobility by applying a configuration corresponding to the one candidate target cell; and
after the first conditional mobility, maintaining a configuration of the source cell for reuse in a subsequent second conditional mobility in which the source cell is a new candidate target cell.

### (Supplementary Note 14)

A radio access network (RAN) node comprising:
at least one memory; and
at least one processor coupled to the at least one memory and configured to:
   receive from a source node or a master node (MN) a control message requesting preparation of a candidate target cell for a first conditional mobility of a user equipment (UE); and
   if a configuration of the candidate target cell provided to the UE for the first conditional mobility is to be reused by the UE for a subsequent second conditional mobility after the first conditional mobility, apply a full configuration to the configuration of the candidate target cell without applying a delta configuration based on a configuration of a current source cell to the configuration of the candidate target cell.

### (Supplementary Note 15)

The RAN node according to Supplementary Note 14, wherein
the first conditional mobility is a conditional handover, a conditional Primary Secondary Cell Group (SCG) Cell (PSCell) change, or a conditional Secondary Node (SN) change, and
the second conditional mobility is a conditional handover, an intra-SN conditional PSCell change, an inter-SN conditional PSCell change, or a conditional SN change.

### (Supplementary Note 16)

A method performed by a radio access network (RAN) node, the method comprising:
receiving from a source node or a master node (MN) a control message requesting preparation of a candidate target cell for a first conditional mobility of a user equipment (UE); and
if a configuration of the candidate target cell provided to the UE for the first conditional mobility is to be reused by the UE for a subsequent second conditional mobility after the first conditional mobility, applying a full configuration to the configuration of the candidate target cell without applying a delta configuration based on a configuration of a current source cell to the configuration of the candidate target cell.

### (Supplementary Note 17)

A radio access network (RAN) node comprising:
at least one memory; and
at least one processor coupled to the at least one memory and configured to:
   receive, from a source node or a master node (MN), a control message requesting preparation of a candidate target cell for a first conditional mobility of a user equipment (UE),
      wherein the control message indicates that a mode of operation is recommended in which a configuration of the candidate target cell to be provided to the UE for the first conditional mobility is reused by the UE for a subsequent second conditional mobility after the first conditional mobility; and
   if the RAN node does not support the mode of operation, send a second control message indicating rejection of the preparation of the candidate target cell to the source node or the MN.

### (Supplementary Note 18)

A method performed by a radio access network (RAN) node, the method comprising:
receiving, from a source node or a master node (MN), a control message requesting preparation of a candidate target cell for a first conditional mobility of a user equipment (UE),
   wherein the control message indicates that a mode of operation is recommended in which a configuration of the candidate target cell to be provided to the UE for the first conditional mobility is reused by the UE for a subsequent second conditional mobility after the first conditional mobility; and
if the RAN node does not support the mode of operation, sending a second control message indicating rejection of the preparation of the candidate target cell to the source node or the MN.

### (Supplementary Note 19)

A radio access network (RAN) node comprising:
at least one memory; and
at least one processor coupled to the at least one memory and configured to:
   receive, from a source node or a master node (MN), a control message requesting preparation of a candidate target cell for a first conditional mobility of a user equipment (UE),
      wherein the control message indicates that a mode of operation is recommended in which a configuration of the candidate target cell to be provided to the UE for the first conditional mobility is reused by the UE for a subsequent second conditional mobility after the first conditional mobility; and
   if the RAN node does not support the mode of operation but can prepare the candidate target cell for the first conditional mobility, send a second control message indicating acceptance of the configuration of the candidate target cell to the source node or the MN.

### (Supplementary Note 20)

A method performed by a radio access network (RAN) node, the method comprising:
receiving, from a source node or a master node (MN), a control message requesting preparation of a candidate target cell for a first conditional mobility of a user equipment (UE),
   wherein the control message indicates that a mode of operation is recommended in which a configuration of the candidate target cell to be provided to the UE for the first conditional mobility is reused by the UE for a subsequent second conditional mobility after the first conditional mobility; and
if the RAN node does not support the mode of operation but can prepare the candidate target cell for the first conditional mobility, sending a second control message indicating acceptance of the configuration of the candidate target cell to the source node or the MN.

This application is based upon and claims the benefit of priority from Japanese Patent Application No. 2021-215150, filed on December 28, 2021, the disclosure of which is incorporated herein in its entirety by reference.

### Reference Signs List

- 1: Master Node (MN)
- 2: Source Secondary Node (S-SN)
- 3: User Equipment (UE)
- 4: Target Secondary Node (T-SN)
- 6: Source Node
- 7: Target Node
- 1504: Processor
- 1505: Memory
- 1506: Modules
- 1603: Baseband Processor
- 1604: Application Processor
- 1606: Memory
- 1607: Modules

## Claims

1. A User Equipment (UE) comprising:
at least one memory; and
at least one processor coupled to the at least one memory and configured to:
evaluate a plurality of execution conditions with respect to a plurality of candidate target cells for a first conditional mobility;
if an execution condition for one of the plurality of candidate target cells is satisfied, execute the first conditional mobility by applying a configuration corresponding to the one candidate target cell; and
reuse one or more execution conditions with respect to one or more candidate target cells other than the one candidate target cell in a subsequent second conditional mobility, while switching a reference cell in the one or more execution conditions from a source cell of the first conditional mobility to the one candidate target cell.

2. The UE according to claim 1, wherein the first conditional mobility is a conditional handover, a conditional Primary Secondary Cell Group (SCG) Cell (PSCell) change, or a conditional Secondary Node (SN) change.

3. A method performed by a User Equipment (UE), the method comprising:
evaluating a plurality of execution conditions with respect to a plurality of candidate target cells for a first conditional mobility;
if an execution condition for one of the plurality of candidate target cells is satisfied, executing the first conditional mobility by applying a configuration corresponding to the one candidate target cell; and
reusing one or more execution conditions with respect to one or more candidate target cells other than the one candidate target cell in a subsequent second conditional mobility, while switching a reference cell in the one or more execution conditions from a source cell of the first conditional mobility to the one candidate target cell.

4. A non-transitory computer readable medium storing a program for causing a computer to perform a method for a User Equipment (UE), the method comprising:
evaluating a plurality of execution conditions with respect to a plurality of candidate target cells for a first conditional mobility;
if an execution condition for one of the plurality of candidate target cells is satisfied, executing the first conditional mobility by applying a configuration corresponding to the one candidate target cell; and
reusing one or more execution conditions with respect to one or more candidate target cells other than the one candidate target cell in a subsequent second conditional mobility, while switching a reference cell in the one or more execution conditions from a source cell of the first conditional mobility to the one candidate target cell.

5. A User Equipment (UE) comprising:
at least one memory; and
at least one processor coupled to the at least one memory and configured to:
evaluate a plurality of execution conditions with respect to a plurality of candidate target cells for a first conditional mobility;
if an execution condition for one of the plurality of candidate target cells is satisfied, execute the first conditional mobility by applying a configuration corresponding to the one candidate target cell;
reuse one or more configurations of one or more candidate target cells other than the one candidate target cell in a subsequent second conditional mobility; and
receive, from a radio access network (RAN) node of the one candidate target cell, one or more updated execution conditions with respect to the one or more candidate target cells for the subsequent second conditional mobility.

6. The UE according to claim 5, wherein
the first conditional mobility is a conditional Primary Secondary Cell Group (SCG) Cell (PSCell) change or a conditional Secondary Node (SN) change,
the radio access network (RAN) node is a Secondary Node (SN) in dual connectivity, and
the at least one processor is configured to receive the one or more updated execution conditions from the SN via a Master Node (MN).

7. A method performed by a User Equipment (UE), the method comprising:
evaluating a plurality of execution conditions with respect to a plurality of candidate target cells for a first conditional mobility;
if an execution condition for one of the plurality of candidate target cells is satisfied, executing the first conditional mobility by applying a configuration corresponding to the one candidate target cell;
reusing one or more configurations of one or more candidate target cells other than the one candidate target cell in a subsequent second conditional mobility; and
receiving, from a radio access network (RAN) node of the one candidate target cell, one or more updated execution conditions with respect to the one or more candidate target cells for the subsequent second conditional mobility.

8. A radio access network (RAN) node comprising:
at least one memory; and
at least one processor coupled to the at least one memory and configured to:
provide a User Equipment (UE) with a plurality of configurations regarding a plurality of candidate target cells of a first conditional mobility of the UE; and
if one of the plurality of candidate target cells is selected by the UE, to enable a subsequent second conditional mobility in which one or more configurations of one or more candidate target cells other than the selected candidate target cell are reused by the UE, provide the UE with one or more updated execution conditions with respect to the one or more candidate target cells.

9. The RAN node according to claim 8, wherein
the first conditional mobility is a conditional Primary Secondary Cell Group (SCG) Cell (PSCell) change or a conditional Secondary Node (SN) change,
the radio access network (RAN) node is a Secondary Node (SN) in dual connectivity, and
the at least one processor is configured to provide the one or more updated execution conditions to the UE via a Master Node (MN).

10. A method performed by a radio access network (RAN) node, the method comprising:
providing a User Equipment (UE) with a plurality of configurations regarding a plurality of candidate target cells of a first conditional mobility of the UE; and
if one of the plurality of candidate target cells is selected by the UE, to enable a subsequent second conditional mobility in which one or more configurations of one or more candidate target cells other than the selected candidate target cell are reused by the UE, providing the UE with one or more updated execution conditions with respect to the one or more candidate target cells.

11. A User Equipment (UE) comprising:
at least one memory; and
at least one processor coupled to the at least one memory and configured to:
evaluate a plurality of execution conditions with respect to one or more candidate target cells for a first conditional mobility from a source node;
if an execution condition for one of the one or more candidate target cells is satisfied, execute the first conditional mobility by applying a configuration corresponding to the one candidate target cell; and
after the first conditional mobility, maintain a configuration of the source cell for reuse in a subsequent second conditional mobility in which the source cell is a new candidate target cell.

12. The UE according to claim 11, wherein the at least one processor is configured to receive an execution condition for the second conditional mobility with respect to the new candidate target cell corresponding to the source cell in the first conditional mobility, from a radio access network (RAN) node of the one candidate target cell, or from a Master Node (MN) if the RAN node is a Secondary Node (SN).

13. A method performed by a User Equipment (UE), the method comprising:
evaluating a plurality of execution conditions with respect to one or more candidate target cells for a first conditional mobility from a source node;
if an execution condition for one of the one or more candidate target cells is satisfied, executing the first conditional mobility by applying a configuration corresponding to the one candidate target cell; and
after the first conditional mobility, maintaining a configuration of the source cell for reuse in a subsequent second conditional mobility in which the source cell is a new candidate target cell.

14. A radio access network (RAN) node comprising:
at least one memory; and
at least one processor coupled to the at least one memory and configured to:
receive from a source node or a master node (MN) a control message requesting preparation of a candidate target cell for a first conditional mobility of a user equipment (UE); and
if a configuration of the candidate target cell provided to the UE for the first conditional mobility is to be reused by the UE for a subsequent second conditional mobility after the first conditional mobility, apply a full configuration to the configuration of the candidate target cell without applying a delta configuration based on a configuration of a current source cell to the configuration of the candidate target cell.

15. The RAN node according to claim 14, wherein
the first conditional mobility is a conditional handover, a conditional Primary Secondary Cell Group (SCG) Cell (PSCell) change, or a conditional Secondary Node (SN) change, and
the second conditional mobility is a conditional handover, an intra-SN conditional PSCell change, an inter-SN conditional PSCell change, or a conditional SN change.

16. A method performed by a radio access network (RAN) node, the method comprising:
receiving from a source node or a master node (MN) a control message requesting preparation of a candidate target cell for a first conditional mobility of a user equipment (UE); and
if a configuration of the candidate target cell provided to the UE for the first conditional mobility is to be reused by the UE for a subsequent second conditional mobility after the first conditional mobility, applying a full configuration to the configuration of the candidate target cell without applying a delta configuration based on a configuration of a current source cell to the configuration of the candidate target cell.

17. A radio access network (RAN) node comprising:
at least one memory; and
at least one processor coupled to the at least one memory and configured to:
receive, from a source node or a master node (MN), a control message requesting preparation of a candidate target cell for a first conditional mobility of a user equipment (UE),
wherein the control message indicates that a mode of operation is recommended in which a configuration of the candidate target cell to be provided to the UE for the first conditional mobility is reused by the UE for a subsequent second conditional mobility after the first conditional mobility; and
if the RAN node does not support the mode of operation, send a second control message indicating rejection of the preparation of the candidate target cell to the source node or the MN.

18. A method performed by a radio access network (RAN) node, the method comprising:
receiving, from a source node or a master node (MN), a control message requesting preparation of a candidate target cell for a first conditional mobility of a user equipment (UE),
wherein the control message indicates that a mode of operation is recommended in which a configuration of the candidate target cell to be provided to the UE for the first conditional mobility is reused by the UE for a subsequent second conditional mobility after the first conditional mobility; and
if the RAN node does not support the mode of operation, sending a second control message indicating rejection of the preparation of the candidate target cell to the source node or the MN.

19. A radio access network (RAN) node comprising:
at least one memory; and
at least one processor coupled to the at least one memory and configured to:
receive, from a source node or a master node (MN), a control message requesting preparation of a candidate target cell for a first conditional mobility of a user equipment (UE),
wherein the control message indicates that a mode of operation is recommended in which a configuration of the candidate target cell to be provided to the UE for the first conditional mobility is reused by the UE for a subsequent second conditional mobility after the first conditional mobility; and
if the RAN node does not support the mode of operation but can prepare the candidate target cell for the first conditional mobility, send a second control message indicating acceptance of the configuration of the candidate target cell to the source node or the MN.

20. A method performed by a radio access network (RAN) node, the method comprising:
receiving, from a source node or a master node (MN), a control message requesting preparation of a candidate target cell for a first conditional mobility of a user equipment (UE),
wherein the control message indicates that a mode of operation is recommended in which a configuration of the candidate target cell to be provided to the UE for the first conditional mobility is reused by the UE for a subsequent second conditional mobility after the first conditional mobility; and
if the RAN node does not support the mode of operation but can prepare the candidate target cell for the first conditional mobility, sending a second control message indicating acceptance of the configuration of the candidate target cell to the source node or the MN.
